# EUROPEAN PATENT SPECIFICATION

(11) **EP 4 207 551 B1**
(45) Date of publication and mention of the grant of the patent: **07.10.2026**
(21) Application number: 22869004.6
(22) Date of filing: 26.08.2022
(51) Int. Cl.: H02J 7/50, H02J 7/00, H02J 7/94, H02J 7/96

(54) **CHARGING AND DISCHARGING CIRCUIT AND ELECTRONIC DEVICE**
LADE- UND ENTLADESCHALTUNG UND ELEKTRONISCHE VORRICHTUNG
CIRCUIT DE CHARGE ET DE DÉCHARGE ET DISPOSITIF ÉLECTRONIQUE

(30) Priority: 16.09.2021 CN 202111085567; 17.11.2021 CN 202111362926
(43) Date of publication of application: 05.07.2023
(73) Proprietor: Honor Device Co., Ltd., Shenzhen, Guangdong 518040 (CN)
(72) Inventor: MAO, Yang, Shenzhen, Guangdong 518040 (CN); ZHANG, Changying, Shenzhen, Guangdong 518040 (CN); QIU, Yupeng, Shenzhen, Guangdong 518040 (CN); ZHOU, Haibin, Shenzhen, Guangdong 518040 (CN); ZHANG, Tieli, Shenzhen, Guangdong 518040 (CN)
(74) Representative: Gill Jennings & Every LLP
(86) International application number: PCT/CN2022/114989
(87) International publication number: WO 2023/040630

(56) References cited:
- CN-A- 104 993 538
- CN-A- 111 817 387
- CN-A- 111 817 387
- CN-U- 212 784 793
- US-A1- 2014 203 780
- US-A1- 2019 081 487

## Description

### TECHNICAL FIELD

This application relates to a charging/discharging circuit and an electronic device.

### BACKGROUND

To improve a battery life of an electronic device, a plurality of batteries may be provided in the electronic device. When the plurality of batteries are to be charged, a parallel charging solution may be used, that is, one charging branch is provided for each battery, and a plurality of charging branches are connected in parallel. However, in a current charging solution, the plurality of batteries cannot be fully charged simultaneously, which may lead to a problem that one battery is fully charged while the other batteries are not fully charged. Consequently, the other batteries cannot achieve maximum application efficiency.

CN1 1 1817387Arelates to the field of electronic devices, and in particular, to a charging circuit, a control method thereof, and an electronic device. US2019/081487 relates generally to balanced charge and discharge control for an asymmetric dual battery system. US2014/203780 relates to battery powered electrical circuits, and more particularly to systems and methods for balancing charge and discharge current in parallel-connected battery packs.

### SUMMARY

This application provides a charging/discharging circuit and an electronic device, to balance charging speeds of a plurality of batteries, and improve application efficiency of the batteries. The invention is defined by the claims. Embodiments not falling within the scope of the claims are for illustrative purposes.

According to a first aspect, the invention provides a charging/discharging circuit, having the features of independent claim 1, namely configured to charge/discharge a battery pack, where the battery pack includes a first battery and a second battery, and the circuit includes a processing module, a first branch, and a second branch;
a first end of the first branch is connected to a voltage supply end, a second end thereof is connected to the first battery, and a voltage output by the voltage supply end is used to charge the first battery through the first branch;
a first end of the second branch is connected to the voltage supply end, a second end thereof is connected to the second battery, and the voltage output by the voltage supply end is used to charge the second battery through the second branch;
the second branch includes a first control circuit, and the first control circuit is configured to adjust impedance of the second branch; and
the processing module is configured to: obtain a first current of the first branch and a second current of the second branch, and indicate, based on the first current and the second current, the first control circuit to adjust the impedance of the second branch, so as to balance the first current and the second current.

When the battery pack is charged, the charging/discharging circuit balances currents of the first branch and the second branch, thereby balancing charging speeds of a plurality of batteries, and improving application efficiency of the batteries.

The charging/discharging circuit further includes a charging management circuit, and a first end of the charging management circuit is used as a charging voltage supply end; and the processing module may be further configured to: obtain a first voltage of the first branch and a second voltage of the second branch, and when a difference between the first voltage and the second voltage is not greater than a preset first threshold, if it is detected that the second end of the first branch receives a charging voltage, control the first end of the charging management circuit to output a voltage.

The processing module is further configured to: when the difference between the first voltage and the second voltage is greater than the preset first threshold, if it is detected that the second end of the first branch receives the charging voltage, control the first end of the charging management circuit not to output the voltage.

In a possible implementation, the processing module is further configured to: when the difference between the first voltage and the second voltage is greater than the preset first threshold, indicate, based on the first current and the second current, the first control circuit to adjust the impedance of the second branch, so as to balance the first current and the second current.

In a possible implementation, the first branch includes a second control circuit, and the second control circuit is configured to adjust impedance of the second branch; and
the processing module is further configured to indicate, based on the first current and the second current, the second control circuit to adjust the impedance of the first branch, so as to balance the first current and the second current.

In a possible implementation, the processing module is specifically configured to:
when the first current is lower than the second current, and a difference between the first current and the second current is greater than a preset second threshold, if it is determined that the impedance of the first branch is greater than minimum impedance, indicate the second control circuit to reduce the impedance of the first branch; or if it is determined that the impedance of the first branch is the minimum impedance, indicate the first control circuit to increase the impedance of the second branch.

In a possible implementation, the processing module is specifically configured to:
when the first current is greater than the second current, and a difference between the first current and the second current is greater than a preset second threshold, if it is determined that the impedance of the second branch is greater than minimum impedance, indicate the first control circuit to reduce the impedance of the second branch; or if it is determined that the impedance of the second branch is the minimum impedance, indicate the second control circuit to increase the impedance of the first branch.

In a possible implementation, the second control circuit is further configured to: when an electronic device is in a powered-off state, control the first branch to be in a connected state.

In a possible implementation, the first control circuit is further configured to: when the electronic device is in the powered-off state, control the second branch to be in a disconnected state.

In a possible implementation, the processing module is further configured to:
when the first battery and the second battery discharge, indicate the first control circuit to adjust the impedance of the second branch to minimum impedance, and indicate the second control circuit to adjust the impedance of the first branch to the minimum impedance.

In a possible implementation, the first control circuit includes a first switching transistor with a linear interval;
a first end and a second end of the first switching transistor are respectively used as the first end and the second end of the second branch, and a control end thereof is connected to the processing module; and
the processing module is specifically configured to: send a control signal to the control end of the first switching transistor, to control impedance and connection/disconnection of the first switching transistor.

In a possible implementation, the first control circuit includes a second switching transistor with a linear interval, a third switching transistor with a linear interval, and a first resistor;
a first end and a second end of the second switching transistor are respectively used as the first end and the second end of the second branch, a control end of the second switching transistor is grounded through the third switching transistor, a control end of the third switching transistor is connected to the processing module, and the second end of the second switching transistor is connected to the control end of the first switching transistor through the first resistor; and
the processing module is specifically configured to: send a control signal to the control end of the third switching transistor, to control impedance and connection/disconnection of the third switching transistor.

In a possible implementation, the control signal sent by the processing module is a PWM signal, and the first control circuit further includes a first voltage control circuit;
that a control end of the third switching transistor is connected to the processing module includes: the control end of the third switching transistor is connected to the processing module through the first voltage control circuit; and
the first voltage control circuit is configured to: convert the PWM signal sent by the processing module into a direct current control signal, and send the converted direct current control signal to the control end of the third switching transistor.

In a possible implementation, the second control circuit includes a fourth switching transistor with a linear interval;
a first end and a second end of the fourth switching transistor are respectively used as the first end and the second end of the first branch, and a control end thereof is connected to the processing module; and
the processing module is configured to send a control signal to the control end of the fourth switching transistor, to control impedance and connection/disconnection of the fourth switching transistor.

In a possible implementation, the second control circuit includes a fifth switching transistor with a linear interval, a sixth switching transistor with a linear interval, and a second resistor;
a first end and a second end of the fifth switching transistor are respectively used as the first end and the second end of the first branch, a control end of the fifth switching transistor is grounded through the sixth switching transistor, and a control end of the sixth switching transistor is connected to the processing module; and
the processing module is configured to send a control signal to the control end of the sixth switching transistor, to control impedance and connection/disconnection of the fourth switching transistor.

In a possible implementation, the control signal sent by the processing module is a PWM signal, and the second control circuit further includes a second voltage control circuit;
that a control end of the sixth switching transistor is connected to the processing module includes: the control end of the sixth switching transistor is connected to the processing module through the second voltage control circuit; and
the second voltage control circuit is configured to: convert the control signal sent by the processing module into a direct current voltage signal, and send the converted direct current control signal to the control end of the third switching transistor.

In a possible implementation, the charging/discharging circuit further includes a collection circuit, and the collection circuit is connected to both the battery pack and the processing module;
the collection circuit is configured to collect currents and/or voltages of the first branch and the second branch, and send the collected currents and/or voltages to the processing module; and
the processing module is further configured to receive the currents and/or voltages.

According to a second aspect, an embodiment of this application provides an electronic device, including a battery pack and the charging/discharging circuit according to any one of the first aspect, where the charging/discharging circuit is configured to charge/discharge a battery in the battery pack.

### BRIEF DESCRIPTION OF DRAWINGS

To describe technical solutions in embodiments of the present invention more clearly, the following briefly describes accompanying drawings required for describing embodiments.
FIG. 1 is a schematic diagram of a structure of a charging/discharging circuit in a scenario according to this application;
FIG. 2 is a schematic diagram of an operating principle of a charging/discharging circuit in the scenario shown in FIG. 1 according to this application;
FIG. 3 is a schematic diagram of an operating principle of a charging/discharging circuit in the scenario shown in FIG. 1 according to this application;
FIG. 4 is a schematic diagram of an operating principle of a charging/discharging circuit in the scenario shown in FIG. 1 according to this application;
FIG. 5 is a schematic diagram of an operating principle of a charging/discharging circuit in the scenario shown in FIG. 1 according to this application;

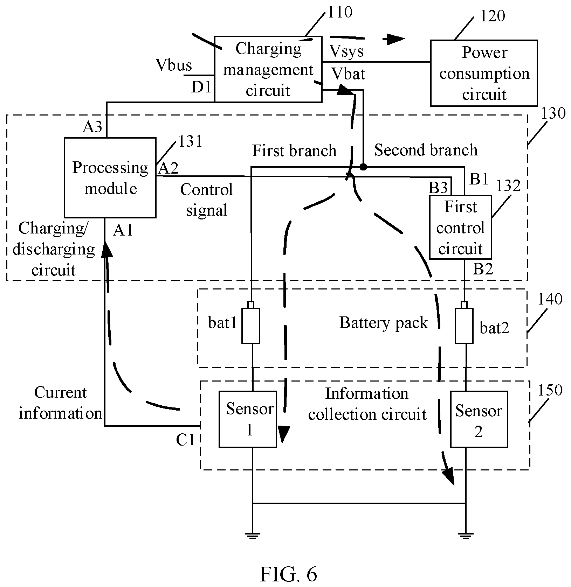

FIG. 6 is a schematic diagram of an operating principle of a charging/discharging circuit in the scenario shown in FIG. 1 according to this application;
FIG. 7A is a schematic diagram of an implementation structure of a charging/discharging circuit in the scenario shown in FIG. 1 according to this application;
FIG. 7B is a schematic diagram of an implementation structure of a charging/discharging circuit in the scenario shown in FIG. 1 according to this application;
FIG. 8A is a schematic diagram of an implementation structure of a charging/discharging circuit in the scenario shown in FIG. 1 according to this application;
FIG. 8B is a schematic diagram of an implementation structure of a charging/discharging circuit in the scenario shown in FIG. 1 according to this application;
FIG. 9 is a schematic diagram of a structure of a charging/discharging circuit in another scenario according to this application;
FIG. 10 is a schematic diagram of an operating principle of a charging/discharging circuit in the scenario shown in FIG. 9 according to this application;
FIG. 11 is a schematic diagram of an operating principle of a charging/discharging circuit in the scenario shown in FIG. 9 according to this application;
FIG. 12 is a schematic diagram of an operating principle of a charging/discharging circuit in the scenario shown in FIG. 9 according to this application;
FIG. 13 is a schematic diagram of an operating principle of a charging/discharging circuit in the scenario shown in FIG. 9 according to this application;
FIG. 14 is a schematic diagram of an operating principle of a charging/discharging circuit in the scenario shown in FIG. 9 according to this application;
FIG. 15 is a schematic diagram of an implementation structure of a charging/discharging circuit in the scenario shown in FIG. 9 according to this application;
FIG. 16 is a schematic diagram of an implementation structure of a charging/discharging circuit in the scenario shown in FIG. 9 according to this application;
FIG. 17 is a schematic diagram of an implementation structure of a charging/discharging circuit in the scenario shown in FIG. 9 according to this application;
FIG. 18 is a schematic diagram of an implementation structure of a charging/discharging circuit in the scenario shown in FIG. 9 according to this application;
FIG. 19 is a schematic diagram of an implementation structure of a charging/discharging circuit in the scenario shown in FIG. 9 according to this application;
FIG. 20 is a schematic diagram of an operating principle of the circuit shown in FIG. 19; and
FIG. 21 is a schematic diagram of an operating principle of the circuit shown in FIG. 19.

### DESCRIPTION OF EMBODIMENTS

Terms used in implementations of this application are only used to explain specific embodiments of this application, and are not intended to limit this application.

In an existing multi-battery parallel charging solution, after a charging branch of each battery is determined, impedance of the charging branch is fixed. Due to design influence of wiring, an architecture, and the like of the charging branch, impedance of a plurality of charging branches cannot be consistent. This causes that charging currents of the plurality of batteries cannot be equal during charging, the plurality of batteries cannot be fully charged simultaneously, which may lead to a problem that one battery is fully charged while the other batteries are not fully charged. Consequently, the other batteries cannot achieve maximum application efficiency.

Therefore, this application provides a charging/discharging circuit and an electronic device, so as to reduce a probability that batteries cannot be fully charged simultaneously during multi-battery parallel charging, and improve application efficiency of the batteries.

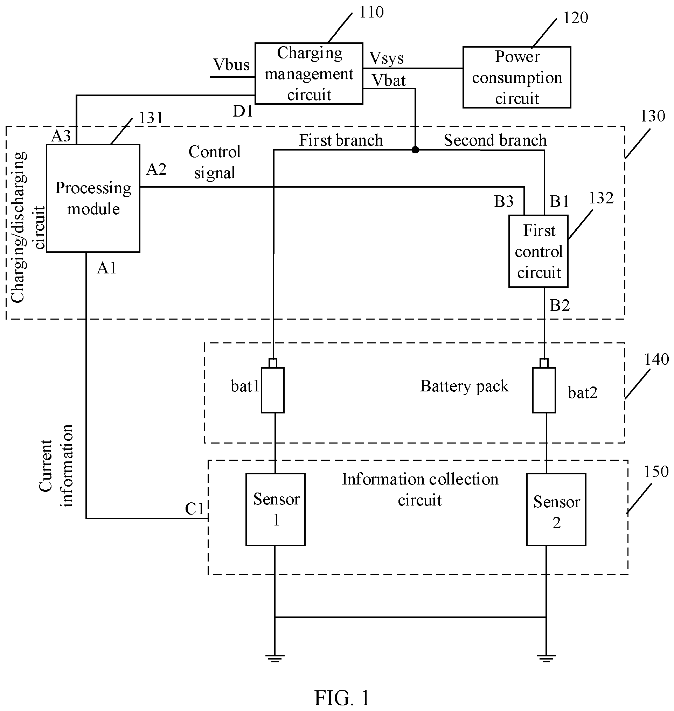

FIG. 1 is a schematic diagram of an applicable scenario of a charging/discharging circuit according to an embodiment of this application. As shown in FIG. 1, the scenario includes a charging management circuit 110, a power consumption circuit 120, a charging/discharging circuit 130, a battery pack 140, and an information collection circuit 150.

The battery pack 140 includes a first battery bat1 and a second battery bat2.

The charging/discharging circuit 130 includes a processing module 131, a first branch, and a second branch. The second branch includes a first control circuit 132, and the first control circuit 132 is configured to adjust impedance of the second branch and control a connected/disconnected state of the second branch.

A Vbus terminal of the charging management circuit 110 is configured to: connect to a charging voltage pin of a charging interface of an electronic device; for example, if the charging interface is a type-c interface, a charging voltage end may be a Vbus pin of the type-c interface, which receives a power supply voltage provided by a charger side. A Vsys terminal of the charging management circuit 110 is connected to the power consumption circuit 120 in the electronic device, to provide a system voltage for the power consumption circuit 120 in the electronic device. A D1 end of the charging management circuit 110 is connected to an A3 end of the processing module 131 in the charging/discharging circuit. A Vbat terminal of the charging management circuit 110 is connected to both a first end of the first branch and a first end of the second branch in the charging/discharging circuit 130. The charging management circuit 110 is configured to manage a transmission line between the Vbus terminal and the Vbat terminal, a transmission line between the Vbus terminal and the Vsys terminal, and a transmission line between the Vbat terminal and the Vsys terminal.

A second end of the first branch is connected to a positive electrode of the first battery bat1. A second end of the second branch is connected to a positive electrode of the second battery bat2.

A negative electrode of the first battery bat1 is grounded through a sensor 1 in the information collection circuit 150, and the sensor 1 is configured to collect a current and/or a voltage of a line on which the first battery bat1 is located. A negative electrode of the second battery bat2 is grounded through a sensor 2 in the information collection circuit 150, and the sensor 2 is configured to collect a current and/or a voltage of a line on which the second battery bat1 is located.

The first control circuit 132 is provided in the second branch. Specifically, a B1 end of the first control circuit 132 is connected to the first end of the second branch, a B2 end thereof is connected to the second end of the second branch, and a B3 end thereof is connected to an A2 end of the processing module 131.

A C1 end of the information collection circuit 150 is connected to an A1 end of the processing module 131, to transmit a current and/or a voltage collected by the information collection circuit 150 to the processing module 131.

A circuit implementation in each scenario is described based on the foregoing circuit structure.

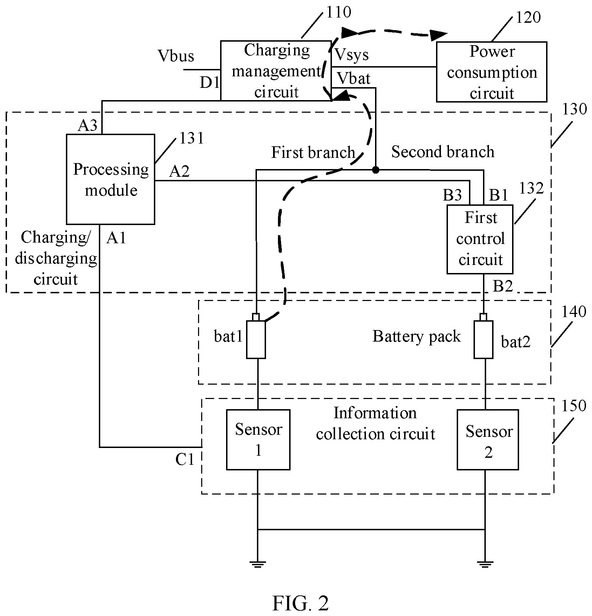

When the electronic device is not powered on, as shown in FIG. 2, a path is formed between the first battery bat1 and the power consumption circuit 120 in the electronic device through the first branch and the charging management circuit 110. If the electronic device is powered on, the first battery bat1 supplies power to the power consumption circuit 120 through the first branch and the charging management circuit 110, so that the electronic device can be powered on and operates normally.

Optionally, the first control circuit 132 may be configured to: when the electronic device is not powered on, control the second branch to be disconnected, so that the first battery bat1 is isolated from the second battery bat2. In this case, when the electronic device is powered on, only the first battery bat1 supplies power to the power consumption circuit 120.

After the electronic device is powered on, the processing module 131 starts to power on and operates. In this case, the processing module 131 may indicate the first control circuit 132 to continue to control the second branch to remain in a disconnected state.

The information collection circuit 150 may be configured to separately sample voltages and currents of lines on which the first battery and the second battery are located, and send the sampled voltages (a first voltage and a second voltage) and the sampled currents (a first current and a second current) to the processing module 131. Optionally, the first voltage may be a voltage of the positive electrode of the first battery bat1, and the second voltage may be a voltage of the positive electrode of the second battery bat2.

Processing of the processing module 131 is divided into the following two scenarios:
Case 1: The Vbus terminal of the charging management circuit 110 does not receive a charging voltage, that is, the electronic device is not connected to the charger to charge the battery. In this case, the battery pack supplies power to the power consumption circuit 120.

The processing module 131 is configured to: when -Vth_open≤V1-V2≤Vth_open, indicate the first control circuit 132 to control the second branch to be connected. Optionally, the processing module 131 may further indicate the first control circuit 132 to adjust the impedance of the second branch to minimum impedance, so as to minimize power consumption of the second branch. V1 is the first voltage, V2 is the second voltage, and Vth_open is a preset threshold.

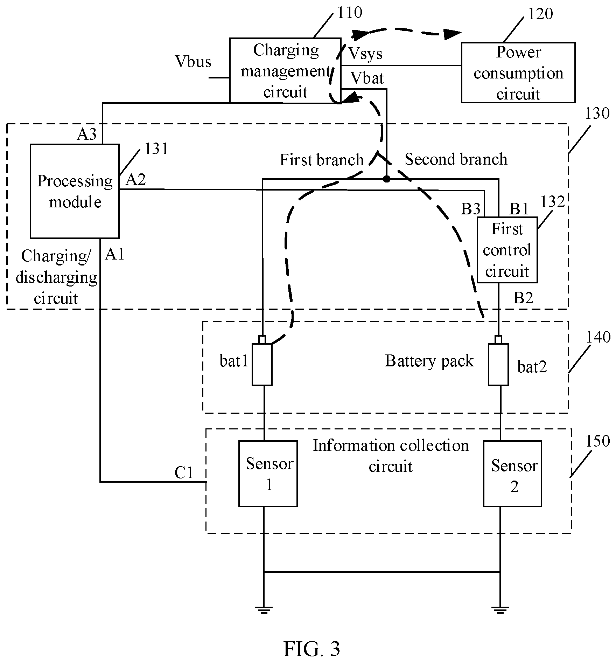

In this case, as shown in FIG. 3, the first battery bat1 and the second battery bat2 supply power to the power consumption circuit 120 simultaneously through the charging management circuit 110.

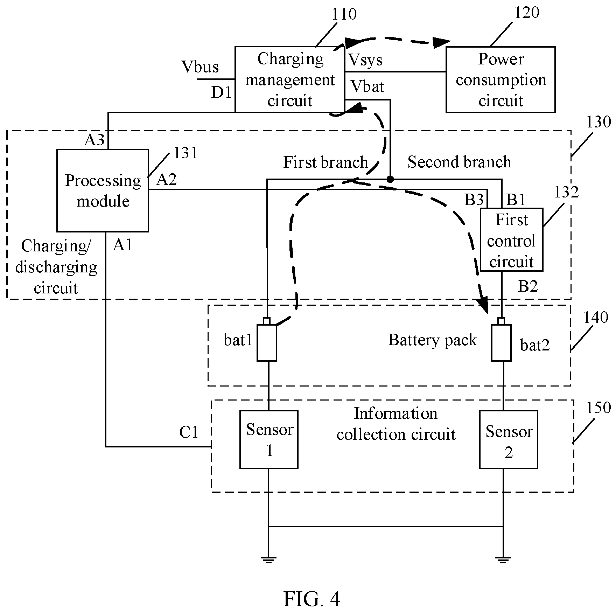

The processing module 131 is configured to: when V1-V2>Vth _open, indicate the first control circuit 132 to control the second branch to be connected, and indicate, based on the first current and the second current, the first control circuit 132 to adjust the impedance of the second branch, so as to enable a difference between the first current and the second current to be not greater than a threshold Ith_balance. In this case, as shown in FIG. 4, the first battery bat1 supplies power to the power consumption circuit 120, and charges the second battery bat2. In addition, the impedance of the second branch is adjusted, to ensure balance between the current of the first branch and the current of the second branch.

The processing module 131 is configured to: when V2-V1>Vth _open, indicate the first control circuit 132 to control the second branch to be connected, and indicate, based on the first current and the second current, the first control circuit 132 to adjust the impedance of the second branch, so as to enable a difference between the first current and the second current to be not greater than a threshold Ith_balance. In this case, the second battery bat2 supplies power to the power consumption circuit 120, and charges the first battery bat1. In addition, the impedance of the second branch is adjusted, to ensure balance between the current of the first branch and the current of the second branch.

Optionally, that the processing module 131 indicates, based on the first current and the second current, the first control circuit 132 to adjust the impedance of the second branch may specifically include:
When I1-I2>Ith balance, the processing module 131 indicates the first control circuit 132 to reduce the impedance of the second branch; or when I2-I1>Ith_balance, the processing module 131 indicates the first control circuit 132 to increase the impedance of the second branch; or when |I1-I2|≤Ith_balance, the processing module 131 indicates the first control circuit 132 to keep the impedance of the second branch unchanged. I1 is the first current, I2 is the second current, and Ith_balance is a preset threshold.

When V1-V2>Vth_open or V2-V1>Vth_open, power of the first battery bat1 and power of the second battery bat2 can be balanced based on the foregoing processing. For example, if a battery in the battery pack is replaced, or there is a large voltage difference between two batteries due to another reason, the power of the first battery bat1 and the power of the second battery bat2 can be balanced based on the foregoing processing.

Case 2: The Vbus terminal of the charging management circuit 110 receives a charging voltage, that is, the electronic device connects to the charger to charge the battery. In this case, the charging voltage received by the Vbus terminal supplies power to the power consumption circuit 120.

The processing module 131 is configured to: when |V1-V2|>Vth_open, if it is detected that the Vbus terminal of the charging management circuit 110 receives the charging voltage, control the charging management circuit 110 to connect a path between the Vbus terminal and the Vsys terminal, disconnect a path between the Vbus terminal and the Vbat terminal, and disconnect a path between the Vbus terminal and the Vsys terminal (that is, the Vbat terminal does not output a voltage, and the battery pack does not supply power to the power consumption circuit 120 through the Vbat terminal); and indicate the first control circuit 132 to control the second branch to be connected.

In this case, the charging management circuit 110 may be configured to: generate the system voltage based on the charging voltage received by the Vbus terminal, output the system voltage at the Vsys terminal to supply power to the power consumption circuit 120, disconnect the path between the Vbus terminal and the Vbat terminal, and disconnect the path between the Vbus terminal and the Vsys terminal.

Optionally, the processing module 131 may be configured to indicate the first control circuit 132 to adjust the impedance of the second branch to minimum impedance, so as to minimize power consumption of the second branch.

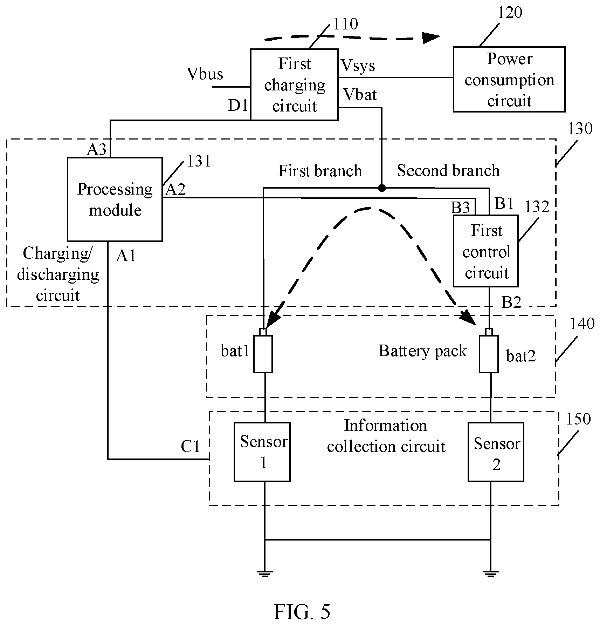

In this case, as shown in FIG. 5, the charging voltage received by the Vbus terminal of the charging management circuit 110 supplies power to the power consumption circuit 120; and a battery with a high voltage charges a battery with a low voltage between the first battery bat1 and the second battery bat2.

The processing module 131 is configured to: when -Vth_open≤V1-V2≤Vth_open,if it is detected that the Vbus terminal of the charging management circuit 110 receives the charging voltage, control the charging management circuit 110 to connect a path between the Vbus terminal and the Vsys terminal and connect a path between the Vbus terminal and the Vbat terminal; and indicate the first control circuit 132 to control the second branch to be connected. Optionally, the processing module 131 may further indicate the first control circuit 132 to adjust the impedance of the second branch to minimum impedance, so as to minimize power consumption of the second branch.

In this case, the charging management circuit 110 may be configured to: generate the system voltage based on the charging voltage received by the Vbus terminal, output the system voltage at the Vsys terminal to supply power to the power consumption circuit 120, generate a voltage for charging the battery pack based on the charging voltage received by the Vbus terminal, and output the voltage at the Vbat terminal to charge the first battery bat1 and the second battery bat2.

In this case, as shown in 6, the charging voltage received by the Vbus terminal of the charging management circuit 110 is used to supply power to the power consumption circuit 120 through the Vsys terminal; and the charging voltage received by the Vbus terminal of the charging management circuit 110 is used to charge the first battery bat1 and the second battery bat2 through the Vbat terminal.

In a process of charging the first battery bat1 and the second battery bat2, the processing module may be specifically configured to:
when I1-12>Ith_charge, indicate the first control circuit 132 to reduce the impedance of the second branch; or when I2-I1>Ith charge, indicate the first control circuit 132 to increase the impedance of the second branch; or when |I1-I2|<Ith_charge, indicate the first control circuit 132 to keep the impedance of the second branch unchanged.

Vth_open represents a preset threshold of the voltage difference, and Ith_charge and Ith_balance each represents a preset threshold of a current difference. A specific value of the threshold is not limited in this embodiment of this application. Values of Ith_charge and Ith_balance may be the same or different.

For case 2, when |V1-V2|>Vth_open, no voltage is output at the Vbat terminal of the charging management module for charging the first battery and the second battery, but the power of the first battery bat1 and the power of the second battery bat2 are first balanced. After |V1-V2|≤Vth_open, a voltage is output at the Vbat terminal of the charging management module for charging the first battery and the second battery. Therefore, based on the foregoing processing, the power of the first battery bat1 and the power of the second battery bat2 can be balanced in the process of charging, thereby improving application efficiency of the batteries.

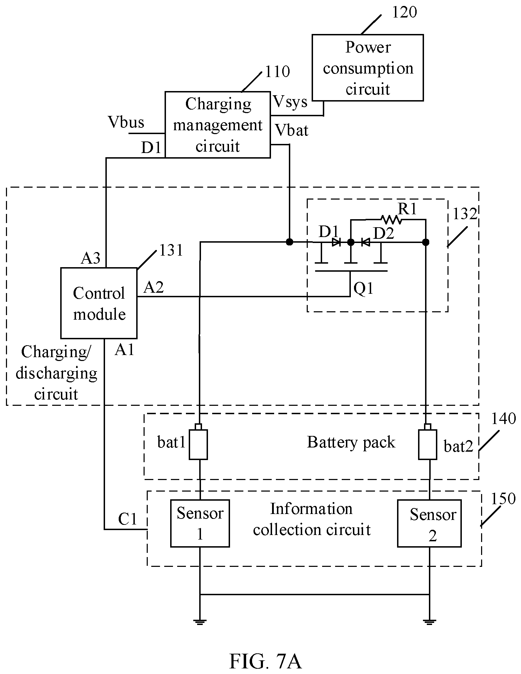

With reference to FIG. 7A to FIG. 8B, the following describes an implementation structure of the first control circuit 132 in the charging/discharging circuit as an example.

In a possible implementation, the first control circuit 132 may be implemented by using a switching transistor with a linear interval, for example, a metal-oxide-semiconductor field-effect transistor (Metal-Oxide-Semiconductor Field-Effect Transistor, MOSFET), a junction field-effect transistor (Junction Field-Effect Transistor, JFET), or a triode.

As shown in FIG. 7A, for example, the first control circuit 132 is implemented by using a bidirectional cut-off MOS transistor. A first end of a bidirectional cut-off MOS transistor Q1 is used as a first end B1 of the first control circuit 132, a second end of the bidirectional cut-off MOS transistor Q1 is used as a second end B2 of the first control circuit 132, and a gate thereof is used as a third end B3 of the first control circuit 132. To ensure normal operation of the bidirectional cut-off MOS transistor Q1, a fourth end of the bidirectional cut-off MOS transistor Q1 is connected to the second end by using a resistor R1. A diode D1 and a diode D2 are body diodes of the bidirectional cut-off MOS transistor Q1.

The processing module 131 may control the bidirectional cut-off MOS transistor Q1 to be connected or disconnected by outputting different direct current voltage signals to the gate of the bidirectional cut-off MOS transistor Q1, so as to control the second branch to be connected or disconnected. Because the bidirectional cut-off MOS transistor Q1 has a linear interval, namely, a variable resistance interval, the processing module 131 may control the bidirectional cut-off MOS transistor Q1 to operate in the linear interval by changing a magnitude of a direct current voltage signal output to the gate of the bidirectional cut-off MOS transistor Q1, and control impedance of the bidirectional cut-off MOS transistor Q1 to increase or decrease, thereby increasing or decreasing the impedance of the second branch. When the processing module 131 controls the bidirectional cut-off MOS transistor Q1 to be completely connected, the bidirectional cut-off MOS transistor Q1 has minimum impedance. Specifically, when the processing module 131 controls the bidirectional cut-off MOS transistor Q1 to be in the linear interval, if a voltage signal output by the processing module 131 through the A2 end is enhanced, the impedance of the bidirectional cut-off MOS transistor Q1 is increased, and the impedance of the second branch is increased; or if a voltage signal output by the processing module 131 through the A2 end is weakened, the impedance of the bidirectional cut-off MOS transistor Q1 is decreased, and the impedance of the second branch is decreased.

When the first control circuit 132 is implemented by using the bidirectional cut-off MOS transistor, for an operating principle of the circuit, refer to the foregoing description. Details are not described herein again.

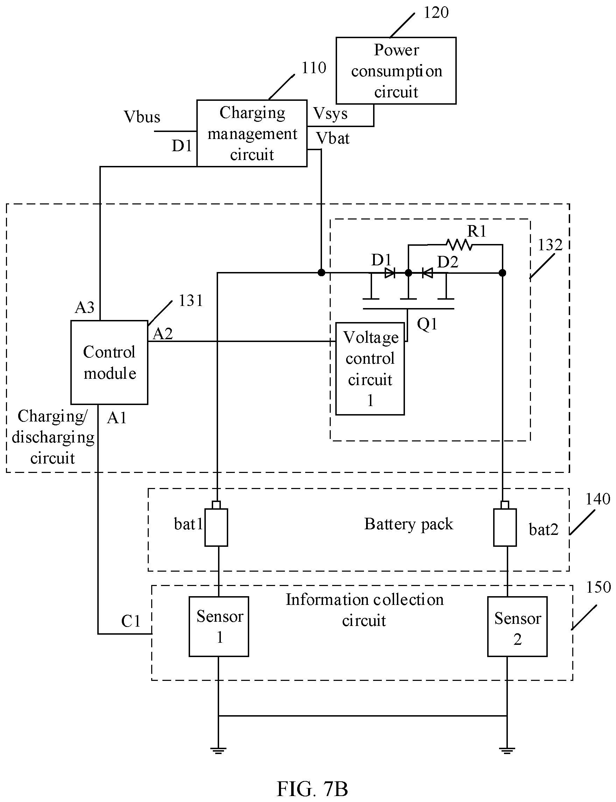

Optionally, the processing module 131 may also output a PWM signal at the A2 end as a control signal of the bidirectional cut-off MOS transistor Q1. In this case, as shown in FIG. 7B, a voltage control circuit 1 is added between the A2 end of the processing module 131 and the gate of the bidirectional cut-off MOS transistor Q1, and the voltage control circuit 1 is configured to convert the PWM signal into a direct current voltage signal. The processing module 131 may adjust, by changing a duty cycle of the PWM signal, a voltage value of the direct current voltage signal obtained by converting by the voltage control circuit 1, to control the bidirectional cut-off MOS transistor Q1 to be completely connected, disconnected, in the linear interval, or the like.

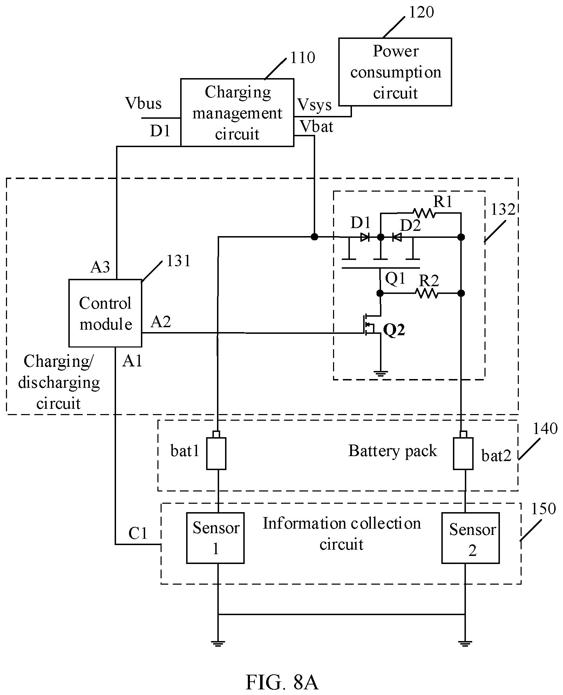

In another possible implementation, as shown in FIG. 8A, the first control circuit 132 may include: A first end and a second end of a bidirectional cut-off MOS transistor Q1 are respectively used as a first end and a second end of the second branch, and a gate thereof is grounded through an NMOS transistor Q2; a control end of the NMOS transistor Q2 is connected to the processing module; and the second end of the bidirectional cut-off MOS transistor Q1 is connected to a control end of the bidirectional cut-off MOS transistor Q1 by using a resistor R2.

The processing module 131 may send a direct current voltage signal to the control end of the NMOS transistor Q2 as a control signal, to control impedance and connection/disconnection of the NMOS transistor Q2, so as to control impedance and connection/disconnection of the bidirectional cut-off MOS transistor Q1.

In this circuit structure, when the NMOS transistor Q2 is disconnected, a gate voltage of the bidirectional cut-off MOS transistor Q1 is 0, and the bidirectional cut-off MOS transistor Q1 is disconnected. When the NMOS transistor Q2 is completely connected or is in a linear interval, impedance of the resistor R2 and the impedance of the NMOS transistor Q2 divides a voltage of the second battery bat2, and the gate of the bidirectional cut-off MOS transistor Q1 receives a divided voltage. A change of the impedance of the NMOS transistor Q2 causes a change of the gate voltage of the bidirectional cut-off MOS transistor Q1; that is, the divided voltage received by the gate of the bidirectional cut-off MOS transistor Q1 changes, to control the bidirectional cut-off MOS transistor Q1 to be completely connected or in the linear interval. In addition, when the bidirectional cut-off MOS transistor Q1 is in the linear interval, a change of the divided voltage may cause the change of the impedance of the bidirectional cut-off MOS transistor Q1, and then cause a change of the impedance of the second branch. When the bidirectional cut-off MOS transistor Q1 is completely connected, the bidirectional cut-off MOS transistor Q1 has minimum impedance, and the second branch has minimum impedance.

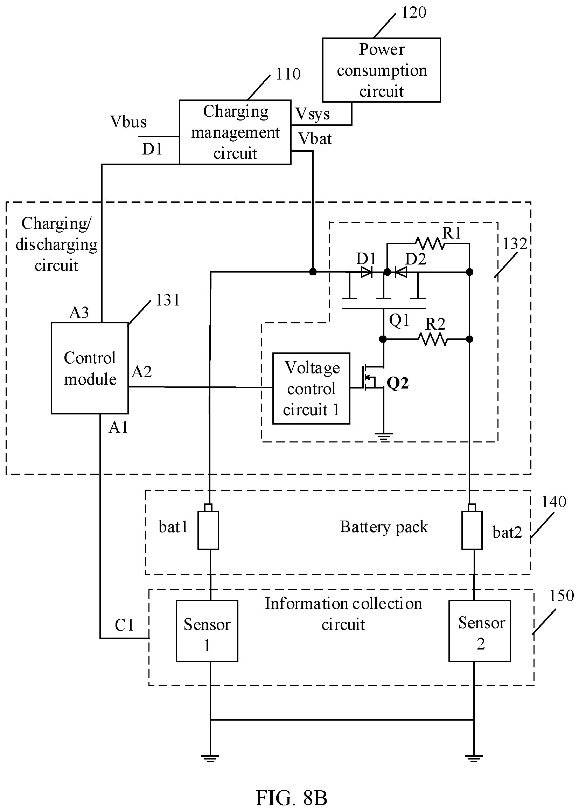

Similar to FIG. 7B, the processing module 131 may output a PWM signal to the gate of the NMOS transistor Q2 at the A2 end. In this case, as shown in FIG. 8B, a voltage control circuit 1 may be added between the A2 end of the processing module 131 and the gate of the NMOS transistor Q2, to convert the PWM signal into the direct current voltage signal.

It may be understood that when no first control circuit is provided in the second branch of the foregoing circuit, the impedance of the branch is usually lower than the impedance of the first branch. That is, in a specific implementation, due to a limitation of an architecture or the like, the second battery may be relatively close to the Vbat terminal of the charging management circuit, and the first battery may be relatively far away from the Vbat terminal of the charging management circuit. In this case, wiring of the second branch circuit is relatively short and wiring of the first branch circuit is relatively long. In this case, when no first control circuit is provided, the impedance of the second branch circuit is lower than the impedance of the first branch circuit. By disposing the first control circuit, the impedance of the second branch circuit is adjusted and changed, so that the first current and the second current are close to each other during charging, it takes similar time to fully charge the first battery and the second battery, thereby improving application efficiency of the batteries.

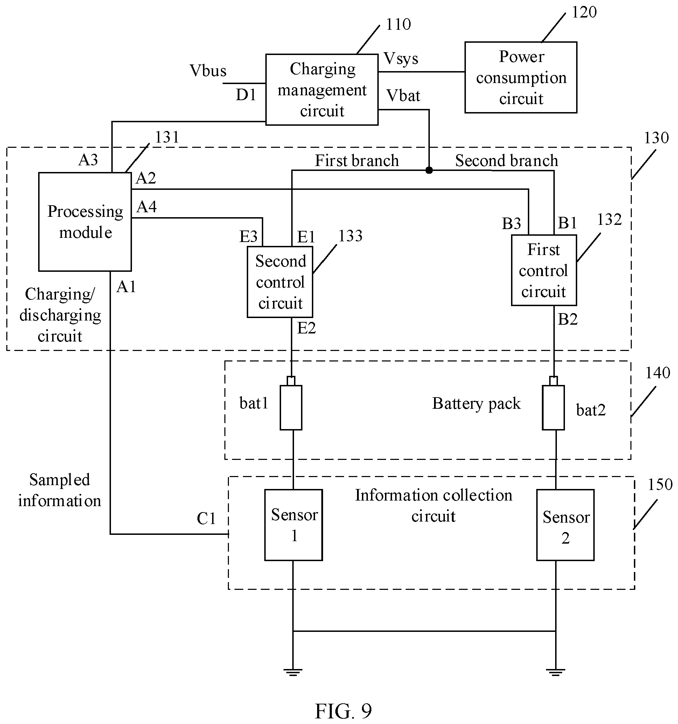

FIG. 9 is a schematic diagram of a structure of a charging/discharging circuit in another embodiment according to this application. As shown in FIG. 9, a second control circuit 133 is provided in the first branch relative to the charging/discharging circuit shown in FIG. 1. Specifically:
An E1 end of the second control circuit 133 is used as a first end of the first branch, an E2 end thereof is used as a second end of the first branch, and an E3 end thereof is connected to the A4 end of the processing module 131.

A circuit operating principle in each scenario is described based on the circuit structure shown in FIG. 9.

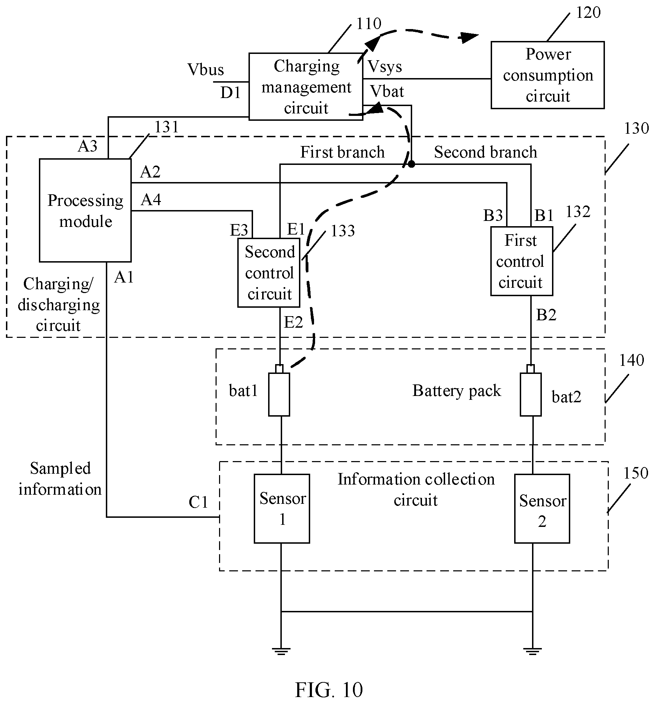

When the electronic device is not powered on, the second control circuit 133 may be configured to: when the electronic device is not powered on, control the first branch to be connected. As shown in FIG. 10, a path is formed between the first battery bat1 and the power consumption circuit 120 through the first branch and the charging management circuit 110. If the electronic device is to be powered on, the first battery bat1 supplies power to the power consumption circuit 120 in the electronic device through the first branch and the charging management circuit 110, so that the electronic device can be powered on and operates normally.

Optionally, the first control circuit 132 may be configured to: when the electronic device is not powered on, control the second branch to be disconnected, so that the first battery bat1 is isolated from the second battery bat2. In this case, when the electronic device is powered on, only the first battery bat1 supplies power to the power consumption circuit 120.

After the electronic device is powered on, the processing module 131 starts to power on and operates. In this case, to isolate the first battery bat1 and the second battery bat2, the processing module 131 may indicate the first control circuit 132 to continue to control the second branch to remain in a disconnected state.

The information collection circuit 150 may be configured to separately sample voltages and currents of lines on which the first battery and the second battery are located, and send the sampled voltages (a first voltage and a second voltage) and the sampled currents (a first current and a second current) to the processing module 131. Optionally, the first voltage may be a voltage of the positive electrode of the first battery bat1, and the second voltage may be a voltage of the positive electrode of the second battery bat2.

Processing of the processing module 131 is divided into the following two scenarios:
Case 1: The Vbus terminal of the charging management circuit 110 does not receive a charging voltage, that is, the electronic device is not connected to the charger to charge the battery. In this case, the battery pack supplies power to the power consumption circuit 120.

The processing module 131 is configured to: when -Vth_open≤V1-V2≤Vth_open, indicate the second control circuit 133 to control the first branch to be connected, and indicate the first control circuit 132 to control the second branch to be connected. Optionally, the processing module 131 may further indicate the first control circuit 132 to adjust the impedance of the second branch to minimum impedance, so as to minimize power consumption of the second branch. Optionally, the processing module 131 may be configured to indicate the second control circuit 133 to adjust impedance of the first branch to minimum impedance, so as to minimize power consumption of the first branch.

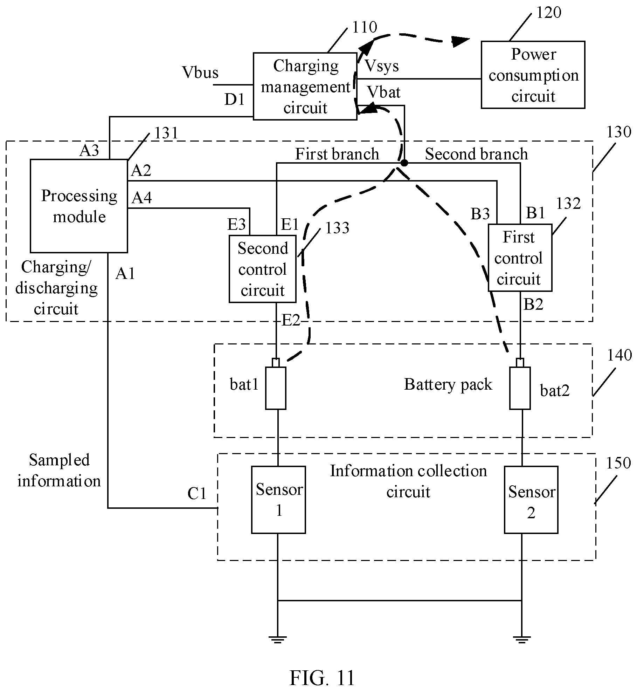

In this case, as shown in FIG. 11, the first battery bat1 and the second battery bat2 supply power to the power consumption circuit 120 simultaneously through the charging management circuit 110.

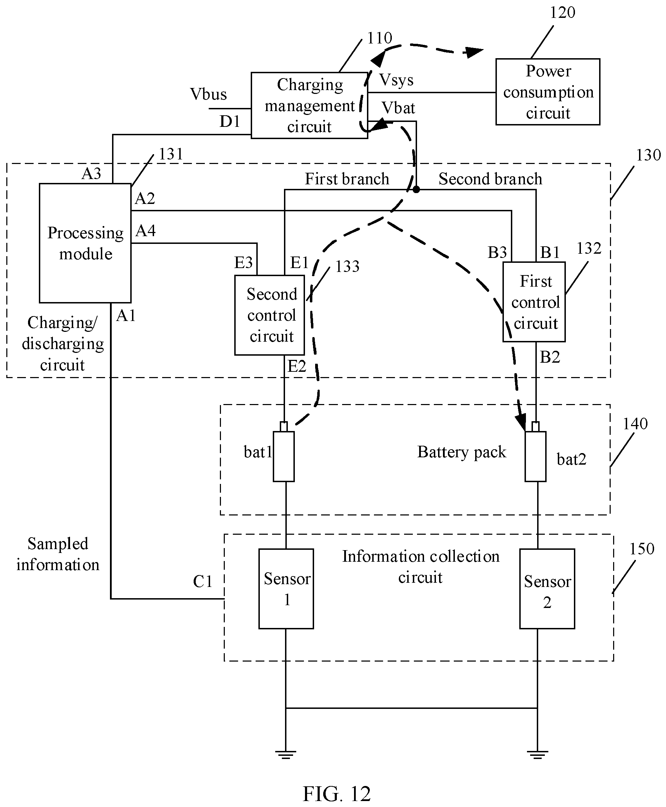

The processing module 131 is configured to: when V1-V2>Vth_open, indicate, based on the first current and the second current, the first control circuit 132 to adjust the impedance of the second branch, so as to enable a difference between the first current and the second current to be not greater than a threshold Ith_balance. In this case, as shown in FIG. 12, the first battery bat1 supplies power to the power consumption circuit 120, and charges the second battery bat2. In addition, the impedance of the second branch is adjusted, to ensure balance between the current of the first branch and the current of the second branch.

The processing module 131 is configured to: when V2-V1>Vth_open, indicate, based on the first current and the second current, the first control circuit 132 to adjust the impedance of the second branch, so as to enable a difference between the first current and the second current to be not greater than a threshold Ith_balance. In this case, the second battery bat2 supplies power to the power consumption circuit 120, and charges the first battery bat1. In addition, the impedance of the second branch is adjusted, to ensure balance between the current of the first branch and the current of the second branch.

Optionally, that the processing module 131 indicates, based on the first current and the second current, the first control circuit 132 to adjust the impedance of the second branch may specifically include:
when I1-I2>Ith balance, indicating the first control circuit 132 to reduce the impedance of the second branch; or when I2-I1>Ith balance, indicating the first control circuit 132 to increase the impedance of the second branch; or when |I1-I2|≤Ith_balance, indicating the first control circuit 132 to keep the impedance of the second branch unchanged.

When V1-V2>Vth_open or V2-V1>Vth_open, power of the first battery bat1 and power of the second battery bat2 can be balanced based on the foregoing processing. For example, if a battery in the battery pack is replaced, or there is a large voltage difference between two batteries due to another reason, the power of the first battery bat1 and the power of the second battery bat2 can be balanced based on the foregoing processing.

Case 2: The Vbus terminal of the charging management circuit 110 receives a charging voltage, that is, the electronic device connects to the charger to charge the battery. In this case, the charging voltage received by the Vbus terminal supplies power to the power consumption circuit 120.

The processing module 131 is configured to: when |V1-V2|>Vth_open, if it is detected that the Vbus terminal of the charging management circuit 110 receives the charging voltage, control the charging management circuit 110 to connect a path between the Vbus terminal and the Vsys terminal, disconnect a path between the Vbus terminal and the Vbat terminal, and disconnect a path between the Vbus terminal and the Vsys terminal (that is, the Vbat terminal does not output a voltage, and the battery pack does not supply power to the power consumption circuit 120 through the Vbat terminal); and indicate the first control circuit 132 to control the second branch to be connected, and indicate the second control circuit 133 to control the first branch to be connected.

Optionally, the processing module 131 may be configured to indicate the second control circuit 133 to adjust the impedance of the first branch to minimum impedance, so as to minimize power consumption of the first branch. Optionally, the processing module 131 may be configured to indicate the first control circuit 132 to adjust the impedance of the second branch to minimum impedance, so as to minimize power consumption of the second branch.

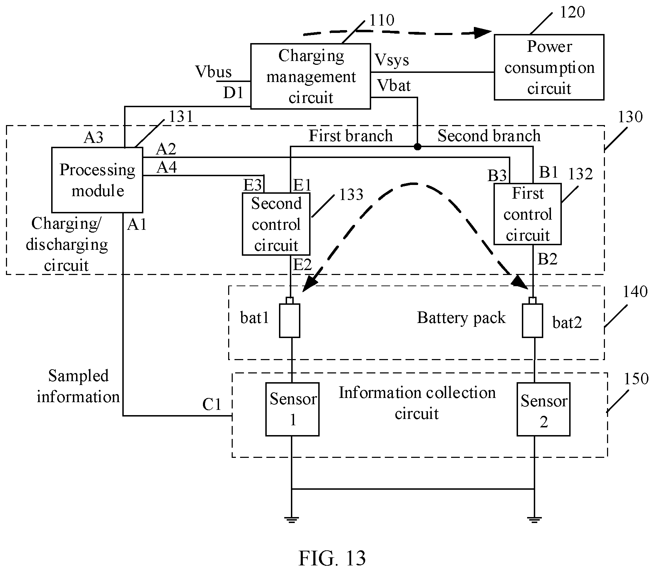

In this case, as shown in FIG. 13, the charging voltage received by the Vbus terminal of the charging management circuit 110 supplies power to the power consumption circuit 120; and a battery with a high voltage charges a battery with a low voltage between the first battery bat1 and the second battery bat2.

The processing module 131 is configured to: when -Vth_open≤V1-V2≤Vth_open,if it is detected that the Vbus terminal of the charging management circuit 110 receives the charging voltage, control the charging management circuit 110 to connect a path between the Vbus terminal and the Vsys terminal and connect a path between the Vbus terminal and the Vbat terminal; and indicate the first control circuit 132 to control the second branch to be connected, and indicate the second control circuit 133 to control the first branch to be connected. Optionally, the processing module 131 may further indicate the first control circuit 132 to adjust the impedance of the second branch to minimum impedance, so as to minimize power consumption of the second branch. Optionally, the processing module 131 may indicate the second control circuit 133 to adjust the impedance of the first branch to minimum impedance, so as to minimize power consumption of the first branch.

In this case, the charging management circuit 110 may be configured to: generate the system voltage based on the charging voltage received by the Vbus terminal, output the system voltage at the Vsys terminal to supply power to the power consumption circuit 120, generate a voltage for charging the battery pack based on the charging voltage received by the Vbus terminal, and output the voltage at the Vbat terminal to charge the first battery bat1 and the second battery bat2.

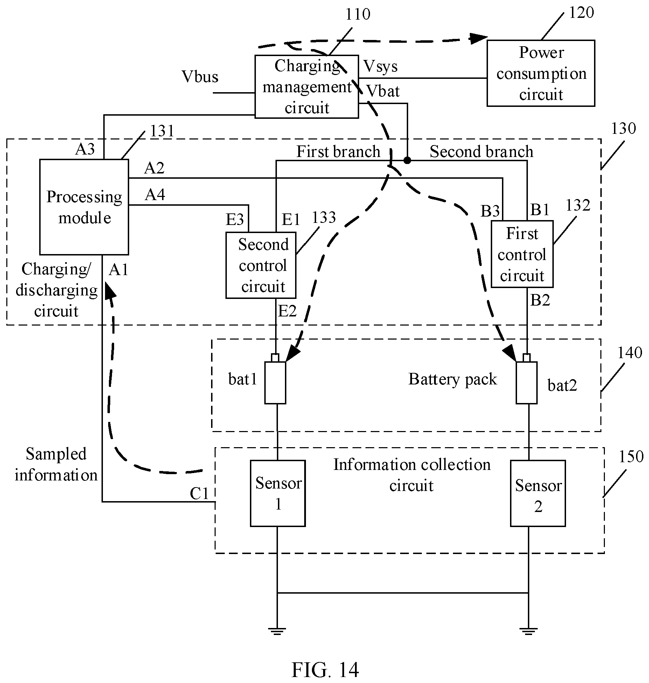

In this case, as shown in FIG. 14, the charging voltage received by the Vbus terminal of the charging management circuit 110 is used to supply power to the power consumption circuit 120 through the Vsys terminal; and the charging voltage received by the Vbus terminal of the charging management circuit 110 is used to charge the first battery bat1 and the second battery bat2 through the Vbat terminal.

In a process of charging the first battery bat1 and the second battery bat2, the processing module 131 may be specifically configured to:
when I1-I2>Ith_charge, indicate the first control circuit 132 to reduce the impedance of the second branch, and/or indicate the second control circuit 133 to increase the impedance of the first branch; or when I2-I1>Ith_charge, indicate the first control circuit 132 to increase the impedance of the second branch, and/or indicate the second control circuit 133 to decrease the impedance of the first branch; or when |I1-I2|≤Ith_charge, indicate the first control circuit 132 to keep the impedance of the second branch unchanged, and indicate the second control circuit 133 to keep the impedance of the first branch unchanged.

Vth_open represents a preset threshold of the voltage difference, and Ith_charge and Ith_balance each represents a preset threshold of a current difference. A specific value of the threshold is not limited in this embodiment of this application. Values of Ith_charge and Ith_balance may be the same or different.

Optionally, to reduce power consumption of the first branch and the second branch, when I1-I2>Ith_charge, the processing module 131 may preferentially reduce the impedance of the second branch until the impedance of the second branch decreases to the minimum impedance; or when I2-I1>Ith_charge, the processing module 131 may preferentially reduce the impedance of the first branch until the impedance of the first branch decreases to the minimum impedance.

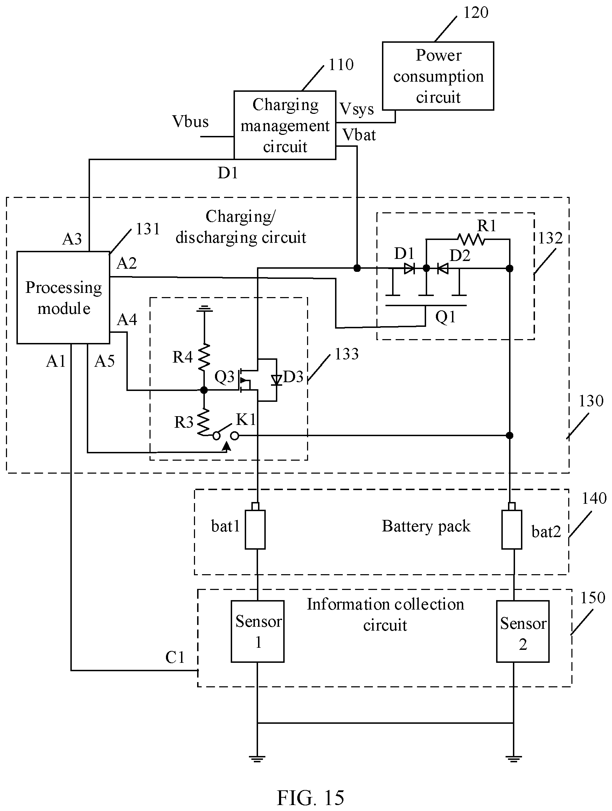

For example, implementation structures of the first control circuit 132 and the second control circuit 133 in the charging/discharging circuit in the scenario shown in FIG. 9 are described in the following with reference to FIG. 15 to FIG. 19.

In the charging/discharging circuit shown in FIG. 15 to FIG. 19, for the implementation structure of the first control circuit 132, refer to an example shown in FIG. 7A to FIG. 8B. Details are not described herein again.

As shown in FIG. 15, the second control circuit 133 may include a PMOS transistor Q3. A drain of the PMOS transistor Q3 is used as the E1 end of the second control circuit 133, a source thereof is used as the E2 end of the second control circuit 133, and a gate thereof is used as the E3 end of the second control circuit 133. A diode D3 is a body diode of the PMOS transistor Q3.

The processing module 131 may output direct current voltage signals of different voltage values through the A4 end, to control the PMOS transistor Q3 to be disconnected, in a linear interval, or completely connected.

When the processing module 131 controls the PMOS transistor to be in the linear interval, if the voltage signal output by the processing module 131 through the A4 end is enhanced, impedance of the PMOS transistor Q3 is increased, and the impedance of the first branch is increased; or if the voltage signal output by the processing module 131 through the A4 end is weakened, the impedance of the PMOS transistor Q3 is decreased, and the impedance of the first branch is decreased.

Optionally, when the electronic device is not powered on, to ensure that the electronic device can be powered on normally, the first branch is connected, so that the battery 1 can supply power to the power consumption circuit. As shown in FIG. 15, the second control circuit 133 may further include a resistor R3, a resistor R4, and a switch K1. A first end of the switch K1 is connected to the positive electrode of the second battery bat2, a second end thereof is grounded through the resistor R3 and the resistor R4 that are connected in series, and a control end of the switch K1 is connected to an A5 end of the processing module 131. One end connected to the resistor R3 and the resistor R4 is connected to the gate of the PMOS transistor Q3. The switch K1 is a switch that is turned on when the voltage of the control end is 0, and is turned off when the voltage of the control end is not 0. In this case:

When the electronic device is not powered on, to ensure that the electronic device is powered on normally, the switch K1 is turned on, a voltage of the second battery bat2 is divided by the resistor R3 and the resistor R4, an obtained divided voltage is output to the gate of the PMOS transistor Q3, the PMOS transistor Q3 is connected, the first branch is in a connected state, and the first battery bat1 can supply power to the power consumption circuit 120 through the first branch and the charging management circuit 110. After the electronic device is powered on, the processing module 131 may output a voltage to the control end of the switch K1, to control the switch K1 to turn off. Correspondingly, the PMOS transistor Q3 is controlled by the voltage signal output through the A4 end of the processing module 131.

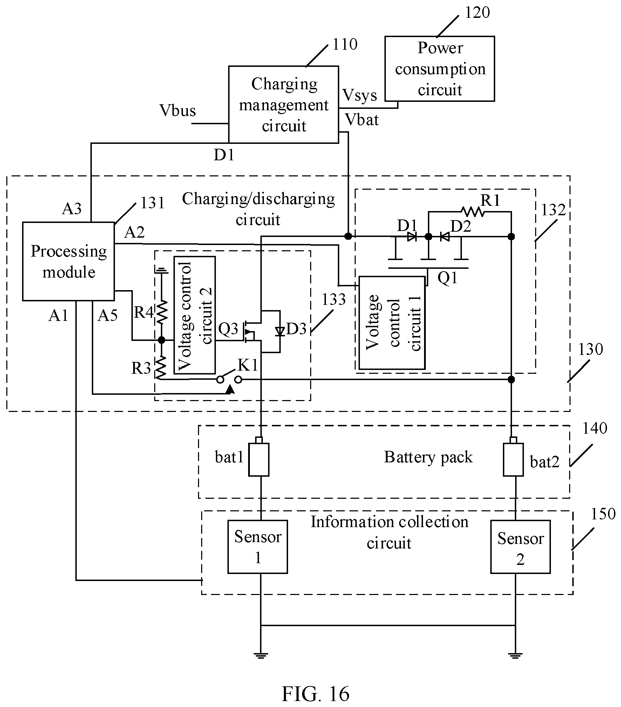

In FIG. 15, the control signal output by the processing module 131 through the A4 end is the direct current voltage signal. Optionally, the control signal output by the processing module 131 through the A4 end may be a PWM signal. In this case, as shown in FIG. 16, a voltage control circuit 2 is added between the connection end of the resistor R3 and the resistor R4 and the gate of the PMOS transistor Q3, to convert the PWM signal into the direct current voltage signal. Correspondingly, the processing module 131 may adjust, by using a duty cycle of the PWM signal, a voltage value of a voltage signal output by the voltage control circuit 2, to control the PMOS transistor Q3 to be completely connected, disconnected, or in the linear interval. The processing module 131 may further control, by adjusting the duty cycle of the PWM signal, the voltage value of the voltage signal output by the voltage control circuit 1 to increase or decrease, to increase or decrease the impedance of the PMOS transistor when the PMOS transistor Q3 is in the linear interval.

Optionally, the switch K1 in the second control circuit 133 in FIG. 16 may be omitted. In this case, the PWM signal output through the A4 end of the processing module 131 may be used to adjust a voltage value of a voltage division signal (which is obtained by dividing the voltage of the second battery bat2 by the resistor R3 and the resistor R4). Correspondingly, the processing module 131 may adjust, by using a duty cycle of the PWM signal, a voltage value of a voltage signal output by the voltage control circuit 2, to control the PMOS transistor Q3 to be completely connected, disconnected, or in the linear interval. The processing module 131 may further control, by adjusting the duty cycle of the PWM signal, the voltage value of the voltage signal output by the voltage control circuit 2 to increase or decrease, to increase or decrease the impedance of the PMOS transistor when the PMOS transistor Q3 is in the linear interval.

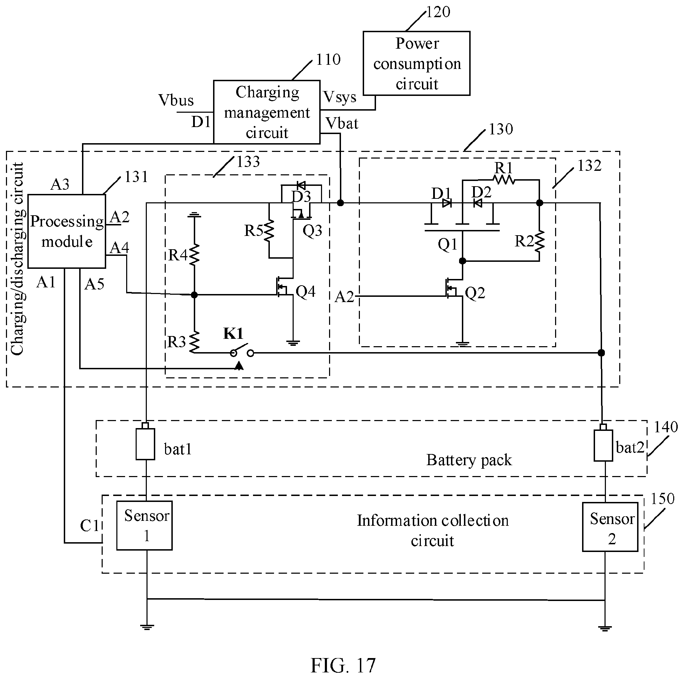

A difference between the second control circuit 133 of the charging/discharging circuit shown in FIG. 17 and the second control circuit 133 shown in FIG. 15 is that a resistor R5 and an NMOS transistor Q4 are added to the second control circuit 133 in FIG. 17. The gate of the PMOS transistor Q3 is connected to a drain of the NMOS transistor Q4. A source of the NMOS transistor Q4 is grounded, and a gate thereof is connected to the A4 end of the processing module 131. Both ends of the resistor R5 are respectively connected to the gate and the source of the PMOS transistor Q3.

In this circuit structure, when the NMOS transistor Q4 is disconnected, a gate voltage of the PMOS transistor Q3 is 0, and the PMOS transistor Q3 is disconnected. When the NMOS transistor Q4 is completely connected or in a linear interval, impedance of the resistor R5 and impedance of the NMOS transistor Q4 divide a voltage of the first battery bat1, and the gate of the PMOS transistor Q3 receives a divided voltage. A change of the impedance of the NMOS transistor Q4 causes a change of the gate voltage of the PMOS transistor Q3; that is, the divided voltage received by the gate of the PMOS transistor Q3 changes, to control the PMOS transistor Q3 to be completely connected or in the linear interval. In addition, when the PMOS transistor Q3 is in the linear interval, a change of the divided voltage may cause the change of the impedance change of the PMOS transistor Q3, and further cause a change of the impedance of the first branch. When the PMOS transistor Q3 is completely connected, the PMOS transistor Q3 has minimum impedance, and the first branch has minimum impedance.

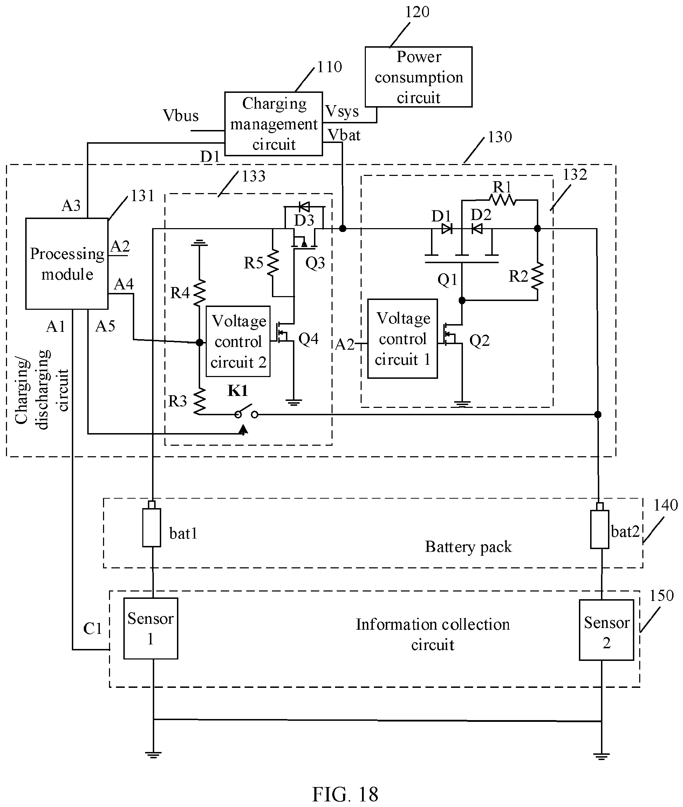

Optionally, the control signal output through the A4 end of the processing module 131 may be a PWM signal. In this case, as shown in FIG. 18, a voltage control circuit 2 may be disposed between one end connected to the resistor R3 and the resistor R4 and the gate of the NMOS transistor Q4. The voltage control circuit 2 is configured to convert the PWM signal into a direct current voltage signal, to control the NMOS transistor Q4 by using the direct current voltage signal. For a specific control principle, refer to the foregoing description. Details are not described herein again.

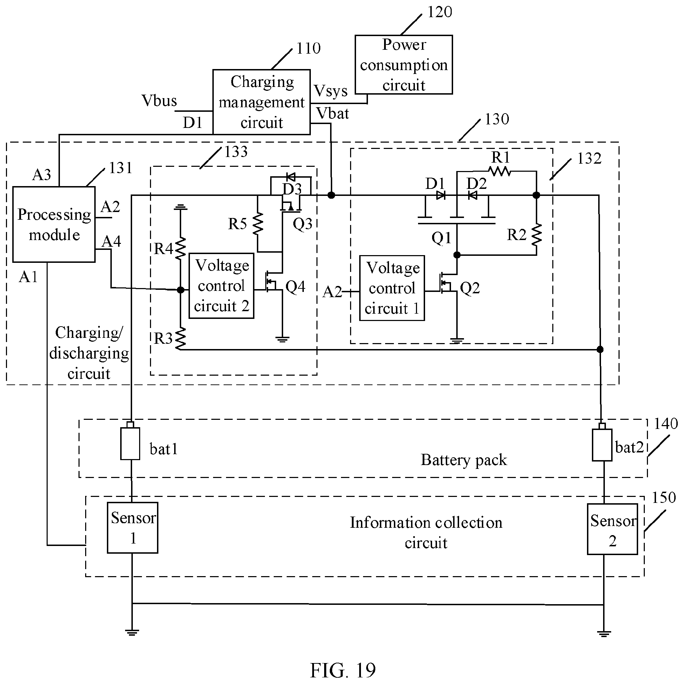

Optionally, as shown in FIG. 19, the switch K1 of the second control circuit in the charging/discharging circuit shown in FIG. 18 may be omitted. For a reason, refer to corresponding descriptions in FIG. 15. Details are not described herein again.

It should be noted that the charging/discharging circuit shown in FIG. 15 to FIG. 19 is merely schematic. Different implementation structures of the first control circuit 132 and the second control circuit 133 may be combined to form the charging/discharging circuit in the embodiments of this application. FIG. 15 to FIG. 19 show only example structures of possible implementations of the charging/discharging circuit, and other possible implementation structures are not listed one by one herein.

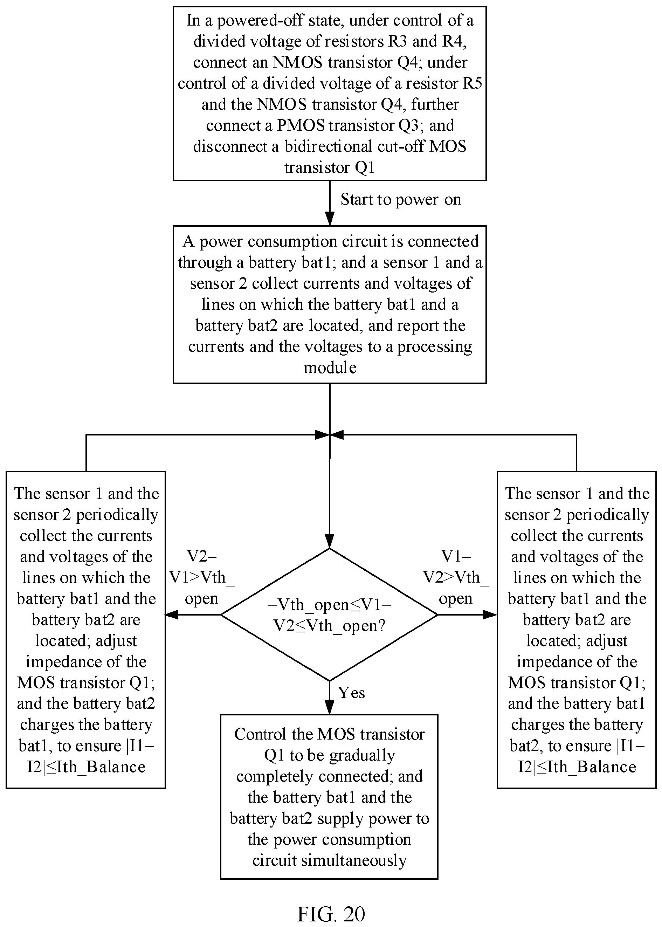

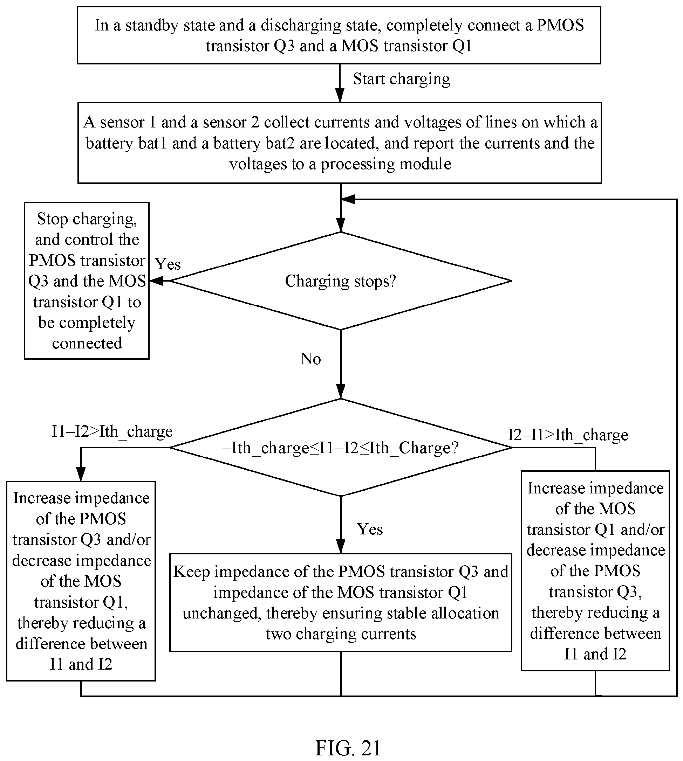

The charging/discharging circuit shown in FIG. 19 is used as an example to describe an operating principle of a specific implementation structure of the charging/discharging circuit with reference to FIG. 20 and FIG. 21.

A flowchart shown in FIG. 20 shows an operating principle of a charging/discharging circuit from power-off to power-on of an electronic device. Specifically:

When the electronic device is powered off, the resistor R3 and the resistor R4 divide the voltage of the second battery bat2 to obtain a divided voltage, to control NMOS transistor Q4 to be connected; and then the resistor R5 and the NMOS transistor Q4 divide the voltage of the first battery bat1 to obtain a divided voltage, to control PMOS transistor Q3 to be connected, so that the first branch is connected. Because the electronic device is not powered on, the gate of the NMOS transistor Q2 is disconnected, and the bidirectional cut-off MOS transistor Q1 is further disconnected.

After the electronic device starts to power on, the first battery bat1 supplies power to the power consumption circuit through the charging management circuit on the first branch. When the electronic device is successfully powered on, the sensor 1 and the sensor 2 respectively correspondingly collect currents and voltages of lines on which the first battery bat1 and the second battery bat2 are located, and report the currents and the voltages to the processing module 131.

The processing module 131 determines a magnitude relationship between the first voltage V1 and the second voltage V2. If -Vth_open≤V1-V2≤Vth_open, the processing module 131 controls the NMOS transistor Q2 to be connected by outputting a gradually enhanced voltage signal, so as to control the bidirectional cut-off MOS transistor Q1 to be completely connected gradually, where the first battery bat1 and the second battery bat2 supply power to the power consumption circuit simultaneously. If V2-V1>Vth_open, the sensor 1 and the sensor 2 periodically collect currents and voltages of the lines on which the first battery bat1 and the second battery bat2 are located, and the processing module 131 adjusts the impedance of the bidirectional cut-off diode Q1 based on the first current and the second current, to ensure |I1-I2|<Ith_Balance in a process in which the second battery bat1 charges the first battery bat2. If V1-V2>Vth _open, the sensor 1 and the sensor 2 periodically collect the currents and the voltages of the lines on which the first battery bat1 and the second battery bat2 are located, and the processing module 131 adjusts the impedance of the bidirectional cut-off diode Q1 based on the first current and the second current, to ensure |I1-I2|≤Ith_Balance in a process in which the second battery bat2 charges the first battery bat1.

A flowchart shown in FIG. 21 shows an operating principle of a charging/discharging circuit for charging a first battery bat1 and a second battery bat2 when an electronic device is in a standby state or a discharging state. Specifically:

In the standby state or the discharging state, the processing module 131 controls the PMOS transistor Q3 and the MOS transistor Q1 to be completely connected.

If the electronic device starts charging, the sensor 1 and the sensor 2 respectively correspondingly collect currents of lines on which the first battery bat1 and the second battery bat2 are located, and report the currents to the processing module 131.

The processing module 131 determines whether the charging stops.

If yes, the charging mode is exited, to control the PMOS transistor Q3 and the MOS transistor Q1 to be completely connected, and this branch ends.

If no, the processing module 131 determines a magnitude relationship between the first current I1 and the second current I2. If -Ith_charge<I1-I2<Ith _Charge, the processing module 131 keeps the impedance of the PMOS transistor Q3 and the impedance of the MOS transistor Q1 unchanged, so as to ensure stable allocation of charging currents of the lines on which the first battery and the second battery are located. If I1-I2>Ith_charge, the processing module 131 increases the impedance of the PMOS transistor Q3, and/or decreases the impedance of the MOS transistor Q1, so as to reduce the difference between I1 and I2. If I2-I1>Ith_charge, the processing module 131 reduces the impedance of the PMOS transistor Q3, and/or increases the impedance of the MOS transistor Q1, so as to reduce the difference between I1 and I2.

Then, the processing module 131 returns to re-determine whether charging stops. This process repeats until the charging stops.

It should be noted that, in the foregoing embodiment, that the first battery bat1 and the second battery bat2 are simultaneously charged is used as an example. In actual application, the processing module 131 may separately select to charge one of the batteries by controlling connection/disconnection of the first branch and connection/disconnection of the second branch.

It should be noted that the processing module may separately determine an operating status of each battery in the battery pack based on the collected voltage and/or current, and when it is detected that an operating status of a battery is abnormal, control a charging/discharging line of the corresponding battery to be disconnected. Optionally, the processing module may further report alarm information of abnormal battery operation to an upper-layer system, so as to improve user experience.

It should be noted that, in the foregoing embodiments, that the battery pack includes two batteries, and the charging/discharging circuit includes two branches is used as an example. In actual application, the battery pack may include more than two batteries. In this case, for a charging/discharging branch of another battery, reference may be made to a charging/discharging branch (namely, a branch formed by the second branch, the second battery, and the sensor 2) corresponding to the second battery.

This application further provides an electronic device, including the circuit shown in any one of the foregoing embodiments.

In embodiments of this application, "at least one" means one or more, and "a plurality of" means two or more. The term "and/or" describes an association relationship of associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following" or a similar expression thereof indicates any combination of the following, and includes any combination of one or more of the following. For example, at least one of a, b, or c may indicate a, b, c, a and b, a and c, b and c, or a and c, where a, b, and c may indicate a singular or plural form.

A person of ordinary skill in the art may be aware that the units and algorithm steps described in embodiments disclosed in this specification can be implemented by electronic hardware or a combination of computer software and electronic hardware. Whether these functions are implemented by using hardware or software depends on specific application of the technical solution and design constraints. A person skilled in the art may use different methods to implement the described functions for each particular application, but it should not be considered that the implementation goes beyond the scope of this application.

A person skilled in the art can clearly understand that, for convenience and brevity of description, reference may be made to corresponding processes in the method embodiments for specific operating processes of the foregoing system, apparatus, and unit. Details are not described herein again.

In several embodiments provided in this application, if any function is implemented in the form of a software functional unit and sold or used as an independent product, the function may be stored in a computer readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, hereinafter referred to as ROM), a random access memory (Random Access Memory, hereinafter referred to as RAM), a magnetic disk, or an optical disc.

## Claims

1. A charging/discharging circuit (130), configured to charge and discharge a battery pack (140), wherein the battery pack (140) comprises a first battery and a second battery, and the circuit comprises a processing module (131), a first branch, and a second branch;
a first end of the first branch is connected to a voltage supply end, a second end thereof is configured to be connected to the first battery, and the first branch is configured such that a voltage output by the voltage supply end is used to charge the first battery through the first branch;
a first end of the second branch is connected to the voltage supply end, a second end thereof is configured to be connected to the second battery, and the second branch is configured such that the voltage output by the voltage supply end is used to charge the second battery through the second branch;
the second branch comprises a first control circuit (132), and the first control circuit (132) is configured to adjust impedance of the second branch; and
the processing module (131) is configured to: obtain a first current of the first branch and a second current of the second branch, and indicate, based on the first current and the second current, the first control circuit (132) to adjust the impedance of the second branch, so as to balance the first current and the second current;
**characterized in that**
the charging/discharging circuit further comprises a charging management circuit (110), and the charging management circuit comprises a Vbat terminal used as the voltage supply end, a Vbus terminal and a Vsys terminal;
wherein the charging management circuit (110) is configured to generate a system voltage at the Vsys terminal based on a charging voltage received at the Vbus terminal of the charging management circuit;
wherein the processing module (131) is further configured to, when the difference between a first voltage of the first branch and a second voltage of the second branch is greater than a preset first threshold, if it is detected that the Vbus terminal of the charging management circuit receives the charging voltage:
control the Vbat terminal of the charging management circuit not to output the voltage and
control the charging management circuit to connect a path between the Vbus terminal and the Vsys terminal of the charging management circuit, and disconnect paths between the Vbus terminal and the Vbat terminal as well as between the Vbat terminal and the Vsys terminal, such that the battery pack does not supply power to a power consumption circuit (120) through the Vbat terminal;
instruct the first control circuit (132) to turn on the second branch;
output the system voltage through the Vsys terminal to power the power consumption circuit (120), and keep the paths between the Vbus terminal and the Vbat terminal as well as between the Vbat terminal and the Vsys terminal disconnected.

2. The circuit according to claim 1, wherein the processing module (131) is further configured to: when the difference between the first voltage and the second voltage is greater than the preset first threshold, indicate, based on the first current and the second current, the first control circuit (132) to adjust the impedance of the second branch, so as to balance the first current and the second current.

3. The circuit according to claim 1, wherein the first branch comprises a second control circuit, and the second control circuit is configured to adjust impedance of the first branch; and
the processing module (131) is further configured to indicate, based on the first current and the second current, the second control circuit to adjust the impedance of the first branch, so as to balance the first current and the second current.

4. The circuit according to claim 3, wherein the processing module (131) is specifically configured to:
when the first current is lower than the second current, and a difference between the first current and the second current is greater than a preset second threshold, if it is determined that the impedance of the first branch is greater than a minimum impedance, indicate the second control circuit to reduce the impedance of the first branch; or if it is determined that the impedance of the first branch is the minimum impedance, indicate the first control circuit (132) to increase the impedance of the second branch.

5. The circuit according to claim 3, wherein the processing module (131) is specifically configured to:
when the first current is greater than the second current, and a difference between the first current and the second current is greater than a preset second threshold, if it is determined that the impedance of the second branch is greater than a minimum impedance, indicate the first control circuit (132) to reduce the impedance of the second branch; or if it is determined that the impedance of the second branch is the minimum impedance, indicate the second control circuit to increase the impedance of the first branch.

6. The circuit according to claim 3, wherein the second control circuit is further configured to: when an electronic device is in a powered-off state, control the first branch to be in a connected state.

7. The circuit according to claim 6, wherein the first control circuit (132) is further configured to: when the electronic device is in the powered-off state, control the second branch to be in a disconnected state.

8. The circuit according to claim 3, wherein the processing module (131) is further configured to:
when the first battery and the second battery discharge, indicate the first control circuit (132) to adjust the impedance of the second branch to a minimum impedance, and indicate the second control circuit to adjust the impedance of the first branch to the minimum impedance.

9. The circuit according to any one of claims 1 to 8, wherein the first control circuit comprises a first switching transistor with a linear interval;
a first end and a second end of the first switching transistor are respectively used as the first end and the second end of the second branch, and a control end thereof is connected to the processing module; and
the processing module is specifically configured to: send a control signal to the control end of the first switching transistor, to control impedance and connection and disconnection of the first switching transistor.

10. The circuit according to any one of claims 1 to 8, wherein the first control circuit comprises a second switching transistor with a linear interval, a third switching transistor with a linear interval, and a first resistor;
a first end and a second end of the second switching transistor are respectively used as the first end and the second end of the second branch, a control end of the second switching transistor is grounded through the third switching transistor, a control end of the third switching transistor is connected to the processing module, and the second end of the second switching transistor is connected to the control end of the second switching transistor through the first resistor; and
the processing module is specifically configured to: send a control signal to the control end of the third switching transistor, to control impedance and connection/disconnection of the third switching transistor;
wherein the control signal sent by the processing module is a PWM signal, and the first control circuit further comprises a first voltage control circuit;
that a control end of the third switching transistor is connected to the processing module comprises: the control end of the third switching transistor is connected to the processing module through the first voltage control circuit; and
the first voltage control circuit is configured to: convert the PWM signal sent by the processing module into a direct current control signal, and send the converted direct current control signal to the control end of the third switching transistor.

11. The circuit according to claim 3, wherein the second control circuit comprises a fourth switching transistor with a linear interval;
a first end and a second end of the fourth switching transistor are respectively used as the Vbat terminal and the Vbus terminal of the charging management circuit, and a control end thereof is connected to the processing module; and
the processing module is configured to send a control signal to the control end of the fourth switching transistor, to control impedance and connection/disconnection of the fourth switching transistor.

12. The circuit according to claim 3, wherein the second control circuit comprises a fifth switching transistor with a linear interval, a sixth switching transistor with a linear interval, and a second resistor;
a first end and a second end of the fifth switching transistor are respectively used as the Vbat terminal and the Vbus terminal of the charging management circuit, a control end of the fifth switching transistor is grounded through the sixth switching transistor, a control end of the sixth switching transistor is connected to the processing module, and the second end of the fifth switching transistor is connected to the control end of the fifth switching transistor through the second resistor; and
the processing module is configured to send a control signal to the control end of the sixth switching transistor, to control impedance and connection/disconnection of the sixth switching transistor;
wherein the control signal sent by the processing module is a PWM signal, and the second control circuit further comprises a second voltage control circuit;
that a control end of the sixth switching transistor is connected to the processing module comprises: the control end of the sixth switching transistor is connected to the processing module through the second voltage control circuit; and
the second voltage control circuit is configured to: convert the control signal sent by the processing module into a direct current voltage signal, and send the converted direct current control signal to the control end of the sixth switching transistor;
wherein the charging/discharging circuit further comprises a collection circuit, and the collection circuit is connected to both the battery pack and the processing module;
the collection circuit is configured to collect currents and/or voltages of the first branch and the second branch, and send the collected currents and/or voltages to the processing module; and
the processing module is further configured to receive the currents and/or voltages.

13. An electronic device, comprising: the battery pack and the charging/discharging circuit according to any one of claims 1 to 12, wherein the charging/discharging circuit is configured to charge and discharge the batteries in the battery pack.

## Patentansprüche

1. Eine Lade-/Entladeschaltung (130), die dazu konfiguriert ist, einen Batteriepack (140) zu laden und zu entladen, wobei der Batteriepack (140) eine erste Batterie und eine zweite Batterie umfasst und die Schaltung ein Verarbeitungsmodul (131), einen ersten Zweig und einen zweiten Zweig umfasst;
ein erstes Ende des ersten Zweigs mit einem Spannungsversorgungsanschluss verbunden ist, ein zweites Ende davon dazu konfiguriert ist, mit der ersten Batterie verbunden zu werden, und der erste Zweig so konfiguriert ist, dass eine vom Spannungsversorgungsanschluss ausgegebene Spannung verwendet wird, um die erste Batterie durch den ersten Zweig zu laden;
ein erstes Ende des zweiten Zweigs mit dem Spannungsversorgungsanschluss verbunden ist, ein zweites Ende davon dazu konfiguriert ist, mit der zweiten Batterie verbunden zu werden, und der zweite Zweig so konfiguriert ist, dass die vom Spannungsversorgungsanschluss ausgegebene Spannung verwendet wird, um die zweite Batterie durch den zweiten Zweig zu laden;
der zweite Zweig eine erste Steuerschaltung (132) umfasst und die erste Steuerschaltung (132) dazu konfiguriert ist, die Impedanz des zweiten Zweigs anzupassen; und
das Verarbeitungsmodul (131) dazu konfiguriert ist: einen ersten Strom des ersten Zweigs und einen zweiten Strom des zweiten Zweigs zu erfassen und basierend auf dem ersten Strom und dem zweiten Strom die erste Steuerschaltung (132) anzuweisen, die Impedanz des zweiten Zweigs anzupassen, um den ersten Strom und den zweiten Strom auszugleichen;
**dadurch gekennzeichnet, dass** die Lade-/Entladeschaltung ferner eine Lademanagementschaltung (110) umfasst und die Lademanagementschaltung einen Vbat-Anschluss, der als Spannungsversorgungsanschluss verwendet wird, einen Vbus-Anschluss und einen Vsys-Anschluss umfasst;
wobei die Lademanagementschaltung (110) dazu konfiguriert ist, basierend auf einer am Vbus-Anschluss der Lademanagementschaltung empfangenen Ladespannung eine Systemspannung am Vsys-Anschluss zu erzeugen;
wobei das Verarbeitungsmodul (131) ferner dazu konfiguriert ist, wenn die Differenz zwischen einer ersten Spannung des ersten Zweigs und einer zweiten Spannung des zweiten Zweigs größer als ein voreingestellter erster Schwellenwert ist, falls erkannt wird, dass der Vbus-Anschluss der Lademanagementschaltung die Ladespannung empfängt:
den Vbat-Anschluss der Lademanagementschaltung so zu steuern, dass er die Spannung nicht ausgibt, und die Lademanagementschaltung so zu steuern, dass sie einen Pfad zwischen dem Vbus-Anschluss und dem Vsys-Anschluss der Lademanagementschaltung verbindet und Pfade zwischen dem Vbus-Anschluss und dem Vbat-Anschluss sowie zwischen dem Vbat-Anschluss und dem Vsys-Anschluss trennt, sodass der Batteriepack eine Energieverbrauchsschaltung (120) nicht über den Vbat-Anschluss mit Strom versorgt;
die erste Steuerschaltung (132) anzuweisen, den zweiten Zweig einzuschalten;
Geben Sie die Systemspannung über den Vsys-Anschluss aus, um den Stromverbrauchskreis (120) zu versorgen, und halten Sie die Pfade zwischen dem Vbus-Anschluss und dem Vbat-Anschluss sowie zwischen dem Vbat-Anschluss und dem Vsys-Anschluss getrennt.

2. Schaltung nach Anspruch 1, wobei das Verarbeitungsmodul (131) ferner dazu konfiguriert ist: wenn die Differenz zwischen der ersten Spannung und der zweiten Spannung größer als der voreingestellte erste Schwellenwert ist, basierend auf dem ersten Strom und dem zweiten Strom die erste Steuerschaltung (132) anzuweisen, die Impedanz des zweiten Zweigs anzupassen, um den ersten Strom und den zweiten Strom auszugleichen.

3. Schaltung nach Anspruch 1, wobei der erste Zweig eine zweite Steuerschaltung umfasst und die zweite Steuerschaltung dazu konfiguriert ist, die Impedanz des ersten Zweigs anzupassen; und
das Verarbeitungsmodul (131) ferner dazu konfiguriert ist, basierend auf dem ersten Strom und dem zweiten Strom die zweite Steuerschaltung anzuweisen, die Impedanz des ersten Zweigs anzupassen, um den ersten Strom und den zweiten Strom auszugleichen.

4. Schaltung nach Anspruch 3, wobei das Verarbeitungsmodul (131) spezifisch dazu konfiguriert ist:
wenn der erste Strom niedriger als der zweite Strom ist und eine Differenz zwischen dem ersten Strom und dem zweiten Strom größer als ein voreingestellter zweiter Schwellenwert ist, wenn bestimmt wird, dass die Impedanz des ersten Zweigs größer als eine minimale Impedanz ist, die zweite Steuerschaltung anzuweisen, die Impedanz des ersten Zweigs zu verringern; oder wenn bestimmt wird, dass die Impedanz des ersten Zweigs die minimale Impedanz ist, die erste Steuerschaltung (132) anzuweisen, die Impedanz des zweiten Zweigs zu erhöhen.

5. Schaltung nach Anspruch 3, wobei das Verarbeitungsmodul (131) spezifisch dazu konfiguriert ist:
wenn der erste Strom größer als der zweite Strom ist und eine Differenz zwischen dem ersten Strom und dem zweiten Strom größer als ein voreingestellter zweiter Schwellenwert ist, wenn bestimmt wird, dass die Impedanz des zweiten Zweigs größer als eine minimale Impedanz ist, die erste Steuerschaltung (132) anzuweisen, die Impedanz des zweiten Zweigs zu verringern; oder wenn bestimmt wird, dass die Impedanz des zweiten Zweigs die minimale Impedanz ist, die zweite Steuerschaltung anzuweisen, die Impedanz des ersten Zweigs zu erhöhen.

6. Schaltung nach Anspruch 3, wobei die zweite Steuerschaltung ferner dazu konfiguriert ist: wenn sich ein elektronisches Gerät in einem ausgeschalteten Zustand befindet, den ersten Zweig so zu steuern, dass er sich in einem verbundenen Zustand befindet.

7. Schaltung nach Anspruch 6, wobei die erste Steuerschaltung (132) ferner dazu konfiguriert ist: wenn sich das elektronische Gerät in dem ausgeschalteten Zustand befindet, den zweiten Zweig so zu steuern, dass er sich in einem getrennten Zustand befindet.

8. Schaltung nach Anspruch 3, wobei das Verarbeitungsmodul (131) ferner dazu konfiguriert ist:
wenn die erste Batterie und die zweite Batterie entladen werden, die erste Steuerschaltung (132) anzuweisen, die Impedanz des zweiten Zweigs auf eine minimale Impedanz einzustellen, und die zweite Steuerschaltung anzuweisen, die Impedanz des ersten Zweigs auf die minimale Impedanz einzustellen.

9. Schaltung nach einem der Ansprüche 1 bis 8, wobei die erste Steuerschaltung einen ersten Schalttransistor mit einem linearen Bereich umfasst;
wobei ein erstes Ende und ein zweites Ende des ersten Schalttransistors jeweils als das erste Ende und das zweite Ende des zweiten Zweigs verwendet werden und ein Steueranschluss davon mit dem Verarbeitungsmodul verbunden ist; und
das Verarbeitungsmodul spezifisch dazu konfiguriert ist: ein Steuersignal an den Steueranschluss des ersten Schalttransistors zu senden, um die Impedanz sowie die Verbindung und Trennung des ersten Schalttransistors zu steuern.

10. Schaltung nach einem der Ansprüche 1 bis 8, wobei die erste Steuerschaltung einen zweiten Schalttransistor mit einem linearen Bereich, einen dritten Schalttransistor mit einem linearen Bereich und einen ersten Widerstand umfasst;
wobei ein erstes Ende und ein zweites Ende des zweiten Schalttransistors jeweils als das erste Ende und das zweite Ende des zweiten Zweigs verwendet werden, ein Steueranschluss des zweiten Schalttransistors über den dritten Schalttransistor geerdet ist, ein Steueranschluss des dritten Schalttransistors mit dem Verarbeitungsmodul verbunden ist und das zweite Ende des zweiten Schalttransistors über den ersten Widerstand mit dem Steueranschluss des zweiten Schalttransistors verbunden ist; und
das Verarbeitungsmodul spezifisch dazu konfiguriert ist: ein Steuersignal an den Steueranschluss des dritten Schalttransistors zu senden, um die Impedanz sowie die Verbindung/Trennung des dritten Schalttransistors zu steuern;
wobei das vom Verarbeitungsmodul gesendete Steuersignal ein PWM-Signal ist und die erste Steuerschaltung ferner eine erste Spannungssteuerschaltung umfasst;
dass ein Steueranschluss des dritten Schalttransistors mit dem Verarbeitungsmodul verbunden ist, umfasst: der Steueranschluss des dritten Schalttransistors ist über die erste Spannungssteuerschaltung mit dem Verarbeitungsmodul verbunden; und
die erste Spannungssteuerschaltung dazu konfiguriert ist: das vom Verarbeitungsmodul gesendete PWM-Signal in ein Gleichstrom-Steuersignal umzuwandeln und das umgewandelte Gleichstrom-Steuersignal an den Steueranschluss des dritten Schalttransistors zu senden.

11. Schaltung nach Anspruch 3, wobei die zweite Steuerschaltung einen vierten Schalttransistor mit einem linearen Bereich umfasst;
ein erstes Ende und ein zweites Ende des vierten Schalttransistors werden jeweils als Vbat-Anschluss und Vbus-Anschluss der Lademanagementschaltung verwendet, und ein Steueranschluss davon ist mit dem Verarbeitungsmodul verbunden; und
das Verarbeitungsmodul ist dazu konfiguriert, ein Steuersignal an den Steueranschluss des vierten Schalttransistors zu senden, um die Impedanz sowie die Verbindung/Trennung des vierten Schalttransistors zu steuern.

12. Schaltung nach Anspruch 3, wobei die zweite Steuerschaltung einen fünften Schalttransistor mit einem linearen Intervall, einen sechsten Schalttransistor mit einem linearen Intervall und einen zweiten Widerstand umfasst;
ein erstes Ende und ein zweites Ende des fünften Schalttransistors werden jeweils als Vbat-Anschluss und Vbus-Anschluss der Lademanagementschaltung verwendet, ein Steueranschluss des fünften Schalttransistors ist über den sechsten Schalttransistor geerdet, ein Steueranschluss des sechsten Schalttransistors ist mit dem Verarbeitungsmodul verbunden, und das zweite Ende des fünften Schalttransistors ist über den zweiten Widerstand mit dem Steueranschluss des fünften Schalttransistors verbunden; und
das Verarbeitungsmodul ist dazu konfiguriert, ein Steuersignal an den Steueranschluss des sechsten Schalttransistors zu senden, um die Impedanz sowie die Verbindung/Trennung des sechsten Schalttransistors zu steuern;
wobei das vom Verarbeitungsmodul gesendete Steuersignal ein PWM-Signal ist und die zweite Steuerschaltung ferner eine zweite Spannungssteuerschaltung umfasst;
dass ein Steueranschluss des sechsten Schalttransistors mit dem Verarbeitungsmodul verbunden ist, umfasst: der Steueranschluss des sechsten Schalttransistors ist über die zweite Spannungssteuerschaltung mit dem Verarbeitungsmodul verbunden; und
die zweite Spannungssteuerschaltung ist dazu konfiguriert: das vom Verarbeitungsmodul gesendete Steuersignal in ein Gleichspannungssignal umzuwandeln und das umgewandelte Gleichstrom-Steuersignal an den Steueranschluss des sechsten Schalttransistors zu senden;
wobei die Lade-/Entladeschaltung ferner eine Erfassungsschaltung umfasst und die Erfassungsschaltung sowohl mit dem Batteriepack als auch mit dem Verarbeitungsmodul verbunden ist;
die Erfassungsschaltung ist dazu konfiguriert, Ströme und/oder Spannungen des ersten Zweigs und des zweiten Zweigs zu erfassen und die erfassten Ströme und/oder Spannungen an das Verarbeitungsmodul zu senden; und
das Verarbeitungsmodul ist ferner dazu konfiguriert, die Ströme und/oder Spannungen zu empfangen.

13. Elektronische Vorrichtung, umfassend: das Batteriepack und die Lade-/Entladeschaltung nach einem der Ansprüche 1 bis 12, wobei die Lade-/Entladeschaltung dazu konfiguriert ist, die Batterien im Batteriepack zu laden und zu entladen.

## Revendications

1. Circuit de charge/décharge (130), configuré pour charger et décharger un bloc-batterie (140), dans lequel le bloc-batterie (140) comprend une première batterie et une seconde batterie, et le circuit comprend un module de traitement (131), une première branche et une seconde branche ;
une première extrémité de la première branche est connectée à une extrémité d'alimentation en tension, une seconde extrémité de celle-ci est configurée pour être connectée à la première batterie, et la première branche est configurée de telle sorte qu'une tension délivrée par l'extrémité d'alimentation en tension soit utilisée pour charger la première batterie à travers la première branche ;
une première extrémité de la seconde branche est connectée à l'extrémité d'alimentation en tension, une seconde extrémité de celle-ci est configurée pour être connectée à la seconde batterie, et la seconde branche est configurée de telle sorte que la tension délivrée par l'extrémité d'alimentation en tension soit utilisée pour charger la seconde batterie à travers la seconde branche ;
la seconde branche comprend un premier circuit de commande (132), et le premier circuit de commande (132) est configuré pour ajuster l'impédance de la seconde branche ; et
le module de traitement (131) est configuré pour : obtenir un premier courant de la première branche et un second courant de la seconde branche, et indiquer, sur la base du premier courant et du second courant, au premier circuit de commande (132) d'ajuster l'impédance de la seconde branche, de manière à équilibrer le premier courant et le second courant ;
**caractérisé en ce que** le circuit de charge/décharge comprend en outre un circuit de gestion de charge (110), et le circuit de gestion de charge comprend une borne Vbat utilisée comme extrémité d'alimentation en tension, une borne Vbus et une borne Vsys ;
dans lequel le circuit de gestion de charge (110) est configuré pour générer une tension système au niveau de la borne Vsys sur la base d'une tension de charge reçue au niveau de la borne Vbus du circuit de gestion de charge ;
dans lequel le module de traitement (131) est en outre configuré pour, lorsque la différence entre une première tension de la première branche et une seconde tension de la seconde branche est supérieure à un premier seuil prédéfini, s'il est détecté que la borne Vbus du circuit de gestion de charge reçoit la tension de charge :
commander la borne Vbat du circuit de gestion de charge pour ne pas délivrer la tension et commander le circuit de gestion de charge pour connecter un chemin entre la borne Vbus et la borne Vsys du circuit de gestion de charge, et déconnecter les chemins entre la borne Vbus et la borne Vbat ainsi qu'entre la borne Vbat et la borne Vsys, de sorte que le bloc-batterie ne fournisse pas d'alimentation à un circuit de consommation d'énergie (120) via la borne Vbat ;
ordonner au premier circuit de commande (132) d'activer la seconde branche ;
transmettre la tension du système via la borne Vsys pour alimenter le circuit de consommation électrique (120), et maintenir les chemins entre la borne Vbus et la borne Vbat ainsi qu'entre la borne Vbat et la borne Vsys déconnectés.

2. Le circuit selon la revendication 1, dans lequel le module de traitement (131) est en outre configuré pour : lorsque la différence entre la première tension et la seconde tension est supérieure au premier seuil prédéfini, indiquer, sur la base du premier courant et du second courant, au premier circuit de commande (132) d'ajuster l'impédance de la seconde branche, de manière à équilibrer le premier courant et le second courant.

3. Le circuit selon la revendication 1, dans lequel la première branche comprend un second circuit de commande, et le second circuit de commande est configuré pour ajuster l'impédance de la première branche ; et
le module de traitement (131) est en outre configuré pour indiquer, sur la base du premier courant et du second courant, au second circuit de commande d'ajuster l'impédance de la première branche, de manière à équilibrer le premier courant et le second courant.

4. Le circuit selon la revendication 3, dans lequel le module de traitement (131) est spécifiquement configuré pour :
lorsque le premier courant est inférieur au second courant, et qu'une différence entre le premier courant et le second courant est supérieure à un second seuil prédéfini, s'il est déterminé que l'impédance de la première branche est supérieure à une impédance minimale, indiquer au second circuit de commande de réduire l'impédance de la première branche ; ou s'il est déterminé que l'impédance de la première branche est l'impédance minimale, indiquer au premier circuit de commande (132) d'augmenter l'impédance de la seconde branche.

5. Le circuit selon la revendication 3, dans lequel le module de traitement (131) est spécifiquement configuré pour :
lorsque le premier courant est supérieur au second courant, et qu'une différence entre le premier courant et le second courant est supérieure à un second seuil prédéfini, s'il est déterminé que l'impédance de la seconde branche est supérieure à une impédance minimale, indiquer au premier circuit de commande (132) de réduire l'impédance de la seconde branche ; ou s'il est déterminé que l'impédance de la seconde branche est l'impédance minimale, indiquer au second circuit de commande d'augmenter l'impédance de la première branche.

6. Le circuit selon la revendication 3, dans lequel le second circuit de commande est en outre configuré pour : lorsqu'un dispositif électronique est dans un état hors tension, commander la première branche pour qu'elle soit dans un état connecté.

7. Le circuit selon la revendication 6, dans lequel le premier circuit de commande (132) est en outre configuré pour : lorsque le dispositif électronique est dans l'état hors tension, commander la seconde branche pour qu'elle soit dans un état déconnecté.

8. Le circuit selon la revendication 3, dans lequel le module de traitement (131) est en outre configuré pour :
lorsque la première batterie et la seconde batterie se déchargent, indiquer au premier circuit de commande (132) d'ajuster l'impédance de la seconde branche à une impédance minimale, et indiquer au second circuit de commande d'ajuster l'impédance de la première branche à l'impédance minimale.

9. Le circuit selon l'une quelconque des revendications 1 à 8, dans lequel le premier circuit de commande comprend un premier transistor de commutation avec un intervalle linéaire ;
une première extrémité et une seconde extrémité du premier transistor de commutation sont respectivement utilisées comme première extrémité et seconde extrémité de la seconde branche, et une extrémité de commande de celui-ci est connectée au module de traitement ; et
le module de traitement est spécifiquement configuré pour : envoyer un signal de commande à l'extrémité de commande du premier transistor de commutation, afin de contrôler l'impédance ainsi que la connexion et la déconnexion du premier transistor de commutation.

10. Le circuit selon l'une quelconque des revendications 1 à 8, dans lequel le premier circuit de commande comprend un second transistor de commutation avec un intervalle linéaire, un troisième transistor de commutation avec un intervalle linéaire, et une première résistance ;
une première extrémité et une seconde extrémité du second transistor de commutation sont respectivement utilisées comme première extrémité et seconde extrémité de la seconde branche, une extrémité de commande du second transistor de commutation est mise à la terre par l'intermédiaire du troisième transistor de commutation, une extrémité de commande du troisième transistor de commutation est connectée au module de traitement, et la seconde extrémité du second transistor de commutation est connectée à l'extrémité de commande du second transistor de commutation par l'intermédiaire de la première résistance ; et
le module de traitement est spécifiquement configuré pour : envoyer un signal de commande à l'extrémité de commande du troisième transistor de commutation, afin de contrôler l'impédance et la connexion/déconnexion du troisième transistor de commutation ;
dans lequel le signal de commande envoyé par le module de traitement est un signal MLI (PWM), et le premier circuit de commande comprend en outre un premier circuit de commande de tension ;
le fait qu'une extrémité de commande du troisième transistor de commutation soit connectée au module de traitement comprend : l'extrémité de commande du troisième transistor de commutation est connectée au module de traitement par l'intermédiaire du premier circuit de commande de tension ; et
le premier circuit de commande de tension est configuré pour : convertir le signal MLI envoyé par le module de traitement en un signal de commande à courant continu, et envoyer le signal de commande à courant continu converti à l'extrémité de commande du troisième transistor de commutation.

11. Le circuit selon la revendication 3, dans lequel le second circuit de commande comprend un quatrième transistor de commutation avec un intervalle linéaire ;
une première extrémité et une seconde extrémité du quatrième transistor de commutation sont respectivement utilisées comme borne Vbat et borne Vbus du circuit de gestion de charge, et une extrémité de commande de celui-ci est connectée au module de traitement ; et
le module de traitement est configuré pour envoyer un signal de commande à l'extrémité de commande du quatrième transistor de commutation, afin de contrôler l'impédance et la connexion/déconnexion du quatrième transistor de commutation.

12. Le circuit selon la revendication 3, dans lequel le second circuit de commande comprend un cinquième transistor de commutation avec un intervalle linéaire, un sixième transistor de commutation avec un intervalle linéaire, et une seconde résistance ;
une première extrémité et une seconde extrémité du cinquième transistor de commutation sont respectivement utilisées comme borne Vbat et borne Vbus du circuit de gestion de charge, une extrémité de commande du cinquième transistor de commutation est mise à la terre par l'intermédiaire du sixième transistor de commutation, une extrémité de commande du sixième transistor de commutation est connectée au module de traitement, et la seconde extrémité du cinquième transistor de commutation est connectée à l'extrémité de commande du cinquième transistor de commutation par l'intermédiaire de la seconde résistance ; et
le module de traitement est configuré pour envoyer un signal de commande à l'extrémité de commande du sixième transistor de commutation, afin de contrôler l'impédance et la connexion/déconnexion du sixième transistor de commutation ;
dans lequel le signal de commande envoyé par le module de traitement est un signal PWM, et le second circuit de commande comprend en outre un second circuit de commande de tension ;
le fait qu'une extrémité de commande du sixième transistor de commutation soit connectée au module de traitement comprend : l'extrémité de commande du sixième transistor de commutation est connectée au module de traitement par l'intermédiaire du second circuit de commande de tension ; et
le second circuit de commande de tension est configuré pour : convertir le signal de commande envoyé par le module de traitement en un signal de tension continue, et envoyer le signal de commande continu converti à l'extrémité de commande du sixième transistor de commutation ;
dans lequel le circuit de charge/décharge comprend en outre un circuit de collecte, et le circuit de collecte est connecté à la fois au bloc-batterie et au module de traitement ;
le circuit de collecte est configuré pour collecter les courants et/ou les tensions de la première branche et de la seconde branche, et envoyer les courants et/ou les tensions collectés au module de traitement ; et
le module de traitement est en outre configuré pour recevoir les courants et/ou les tensions.

13. Dispositif électronique, comprenant : le bloc-batterie et le circuit de charge/décharge selon l'une quelconque des revendications 1 à 12, dans lequel le circuit de charge/décharge est configuré pour charger et décharger les batteries dans le bloc-batterie.
